# EUROPEAN PATENT SPECIFICATION

(11) **EP 1 015 841 B1**
(45) Date of publication and mention of the grant of the patent: **09.04.2003**
(21) Application number: 98943593.8
(22) Date of filing: 15.09.1998
(51) Int. Cl.: F42B 35/00, G02B 21/08, G02B 21/18

(54) **A METHOD AND APPARATUS FOR IMAGING A CARTRIDGE CASE EJECTOR MARKINGS**
VERFAHREN UND VORRICHTUNG ZUR ABBILDUNG VON AUSWERFERABDRÜCKEN AUF PATRONENHÜLSEN
PROCEDE ET DISPOSITIF PERMETTANT DE REPRESENTER PAR DES IMAGES LES MARQUES D'EJECTEUR D'UNE DOUILLE DE CARTOUCHE

(30) Priority: 16.09.1997 WO PCT/CA97/00661; 31.03.1998 US 52173
(43) Date of publication of application: 05.07.2000
(73) Proprietor: FORENSIC TECHNOLOGY WAI INC., Montreal, Quebec H4B 2M8 (CA)
(72) Inventor: LAJEUNESSE, Benoît, Sainte-Dorothée, Québec H7Y 1A1 (CA); LAURIN, Luc, Brossard, Québec J4Y 1A8 (CA); BOUDREAU, Yvan, Melocheville, Québec J0S 1X0 (CA)
(74) Representative: Grättinger & Partner (GbR)
(86) International application number: CA9800870
(87) International publication number: WO99014553

(56) References cited:
- EP-A- 0 775 889
- WO-A-97/21128
- DE-A- 3 723 361
- DE-A- 4 204 500
- DE-C- 593 232
- GB-A- 2 105 226
- US-A- 3 780 614
- US-A- 3 991 599
- US-A- 4 135 778
- US-A- 4 735 497
- US-A- 5 390 108
- US-A- 5 654 801

## Description

### FIELD OF INVENTION

The present invention relates to fired cartridge case examination imaging apparatus for use during forensic analysis of spent cartridge cases. The invention more particularly relates to an apparatus and a method for imaging an ejector mark on a cartridge case, as defined in the preambles of claims 1 and 31 respectively and to a device for holding and positioning a cartridge case for imaging according to the preamble of claim 22.

### BACKGROUND OF INVENTION

Forensic analysis of spent bullets and cartridge cases by experts since at least the 1920's has provided law enforcement organizations with a very effective technique for solving crimes involving firearms. However, the process of comparison of markings on cartridge cases and bullets has always been a time consuming and complicated process for the ballistics expert. Typically, a trained ballistics expert or technician can spend one to two hours comparing just two different bullets or cartridge cases. A trained technician would have to spend a day or more to compare several bullets or shells. Because of the difficult nature of the process, law enforcement agencies in the past have only used analysis by comparison of bullets or cartridge cases when they were reasonably sure a match would exist or in preparation for trial, due to the time consuming and complex nature of the work. Thus, it was impractical if not impossible, to use comparison of cartridge cases and spent bullets in the initial investigative process. A typical crime scene today, where firearms have been used in the commission of a crime, can have a significant numbers of spent cartridge cases and bullets given the widespread availability of automatic and semiautomatic weapons. Thus, an important and significant need has existed for some time to automate and systematize the process of forensic analysis of spent bullets and cartridge cases to make it an effective investigative tool.

A number of significant developments have occurred over the last several years in the area of automated spent bullet and cartridge case analysis. In fact, the owner of the rights to the present application has been involved in a number of breakthrough developments in this field of technology. Some of the more significant developments are as follows:
U.S. Patent 5,390,108 COMPUTER AUTOMATED BULLET ANALYSIS APPARATUS, and U.S. Patent 5,659,489 METHOD AND APPARATUS FOR OBTAINING A SIGNATURE FROM A FIRED BULLET, incorporated herein by reference. These patents disclose an apparatus and method for automated analysis and comparison of spent bullets. The system produces images of the spent bullets, digitalizes those images, then stores the images for later electronic comparison to determine if a potential match exists between the subject bullet and similarly acquired images of bullets from the same or a different crime scene. Thus, with this system the tedious task of comparing spent bullets from many crime scenes is automated and the time needed to do the analysis drastically reduced.
U.S. Patent 5,379,106 METHOD AND APPARATUS FOR MONITORING AND ADJUSTING THE POSITION OF AN ARTICLE UNDER OPTICAL OBSERVATION, incorporated herein by reference. This patent described among other things a method and apparatus for automating the positioning of a spent bullet for imaging.
U.S. Patent 5,633,717 METHOD FOR MONITORING AND ADJUSTING THE POSITION OF AN OBJECT UNDER OPTICAL OBSERVATION FOR IMAGING, incorporated herein by reference. This patent disclosed another refinement for automating the positioning of an object for optical observation.
U.S. Patent 5,654,801 FIRED CARTRIDGE EXAMINATION METHOD AND IMAGING APPARATUS, incorporated herein by reference. This patent provides an apparatus and method of illuminating the breech face of a cartridge case with axial symmetric lighting in order to obtain images of firing pin impressions on the breech face of a spent cartridge case.

The above systems provide the forensic scientist analyzing spent bullets and cartridge cases with effective tools for comparing spent bullets or cartridge cases in a variety of situations. The systems can be used to examine and analyze spent bullets from a specific crime scene with spent bullets or cartridge cases from a multitude of other crime scenes. Another use, among a number of possibilities, is in the examination of fired bullets or spent cartridge cases from a suspect firearm. Thus, the police in conducting an investigation of a crime scene from which it obtains spent bullets and/or cartridge cases have the ability to compare them with thousands of others from widely different crime scenes within a very short period of time. Naturally, a trained forensic ballistics expert has to make the final determination of whether or not a match exists between various bullets or shells. The inventions referred to above and the one described in this specification and its claims provide powerful analytical tools for standardized, systematized and automated analysis and comparison of literally thousands of cartridge cases and bullets in a matter of minutes and present the expert with a short list of the ones which offer the best match. In the list of potential matches it also provides a priority on those that make the best match. Thus with the inventions referred to herein the expert no longer has to individually handle, sift through and compare hundreds or thousands of possibilities. However, even before the expert examines the short list of potential matches the list itself provides significant leads to the police for their investigation.

The above patents generally relate to imaging and analyzing, with appropriate methods and apparatus, the markings left by a gun barrel on spent bullets, the impressions left by the breech face of a gun on the top of the head of the cartridge case and the impression left by the firing pin on the primer of a cartridge case. However, during loading, firing and ejection of a cartridge case the ejector mechanism of the gun also leaves a unique impression on the cartridge case. This results from the fact that during the manufacturing process of a firearm the machining and milling operations leave each ejector mechanism surface with slightly different engravings which are unique to the specific firearm.

The ejector mark which appears on the rear face of a cartridge case varies in depth and in degree of definition depending on the unique ejector mechanism of each firearm. The ejector mark usually starts at the edge of the rim of the top of the head of the cartridge case and generally extends in a linear direction across the cartridge case surface as the result of movement of the ejector. The ejector mark generally has a number of striations of other significant markings which give it a unique character and thus identify it a being made by the ejector mechanism of a specific firearm. However, given the location of the ejector mark and their general configuration and depth, imaging and lighting techniques and apparatus which have been developed for efficient standardized and systematized analysis and comparison as described in the above patents, and as now, practiced do not provide adequate means for obtaining good images which can be used for efficient standardized and systematized comparison and analysis of ejector mark images on cartridge cases obtained from a wide variety of locations and at different times. All of the above mentioned methods of lighting, have proved inadequate for obtaining necessary and useful images for standardized and systematized comparison and analysis of ejector mark. Accordingly, there is a need for an imaging system which can obtain useful images of an ejector mark for standardized and systematized comparison and analysis. There is also a need for a method and apparatus for properly positioning of cartridge case for imaging of the ejector mark, which neither current practice, nor the above mentioned patents meet.

DE-A 593232 discloses a device for illuminating small pieces to be investigated from various light source positions. To this end the illuminating device comprises a support which is rotatable about the optical axis of the investigation microscope. The light source is slidably received on said support so as to vary the vertical angle of illumination.

U.S.-A 4135778 discloses a microscope lens system to which a pair of light sources is associated which allows illuminating of the piece to be investigated from two different positions.

U.S.-A 3780614 discloses a multiple bullet and cartridge holder for use with a forensic microscope, which holder has a rotatable carriage a plurality of bolt like mounts intended to receive a cartridge case each. By rotation of said carriage specimens for examination may be interchanged rapidly.

### SUMMARY OF THE INVENTION

It is an object of the present invention to provide an efficient and effective method and apparatus for obtaining suitable images for standardized and systematized comparison and analysis of an ejector mark on a cartridge case. In brief, the object of the present invention is achieved by taking two images of the ejector mark on the cartridge case with lighting for illumination set at a first predetermined position for the first image and lighting for illumination set at a second predetermined position for the second image.

It is a further object of the present invention to provide a method and apparatus to manipulate the orientation of a cartridge case into a desired imaging position.

In accordance with the present invention the objects set out above are achieved by an apparatus for imaging an ejector mark as defined in claim 1, by a method for imaging an ejector mark as defined in claim 31 and by a device for holding and positioning a cartridge case as defined in claim 22.

Thus, according to the invention there is provided an apparatus for imaging ejector mark on a cartridge case, said apparatus having: a cartridge case holding device for holding a cartridge case in a predetermined orientation for imaging when the holding device is positioned in an imaging position, an imaging device mounted with its optical axis positioned to image the top of the head of a cartridge case being held by the holding device, a light source mounted in a first predetermined position for illuminating the cartridge case held by the holding device for obtaining a first image by the imaging device, a light source mounted in a second predetermined position for illuminating the cartridge case held by the holding device for obtaining a second image by the imaging device. The images thus obtained can be used for comparative analysis.

In another aspect of the invention, to provide a light source at the first and second predetermined position, it includes a first light source at the first predetermined position and a second light source at the second predetermined position.

In yet another variation of the invention, to provide a light source at the first and second predetermined positions, it includes a single light source mounted for movement between the first and second predetermined position.

In yet another variation of the invention, to provide a light source at the first and second predetermined position, it includes a fixed light source with the holding device set on a rotating stage to rotate the holding device from the first to the second predetermined position to place the cartridge case at the first and second predetermined position for imaging.

In yet another variation of the invention, to provide a light source at the first and second predetermined position, it includes a holding device which rotates the cartridge case from the first predetermined position to the second predetermined position.

In a further aspect of this invention the preferred embodiment calls for positioning the light sources at the first and second predetermined positions such that directional axis of illumination of the light source at the first predetermined position is in an orthogonal relationship to the directional axis of the light source at the second predetermined position and both the directional axis of the light source at the first predetermined position and the directional axis of the light source at the second predetermined position make an oblique angle of approximately 30 degrees with the plane of the top of the head of the cartridge case being imaged.

In a further aspect of this invention it also provides a device for holding and positioning a cartridge case for imaging which has a first plate with a face side, and a second plate with a face side, the plates being detachably biased towards each other on their face sides so that they securely hold between them a cartridge case with the longitudinal axis of the cartridge case approximately parallel to the face of the first plate and the second plate so that the breech face of the cartridge case is in an imaging position, with means to rotate the cartridge case about its longitudinal axis.

In a further aspect of this invention the means to rotate the cartridge case around its longitudinal axis is comprised of at least one roller on the face side of the first plate and two rollers on the face side of the second plate, the axis of rotation of all the rollers being substantially parallel to each other and the rollers positioned such that when the faces of the plates are biased towards each other, so the rollers can securely hold there between them a cartridge case with the longitudinal axis of the cartridge case parallel to the axis of the rollers and the rollers being free to rotate the cartridge case about its longitudinal axis. In another aspect of this invention the holding device has one of its rollers offset at an acute angle to provide for movement of the cartridge case along its longitudinal axis towards an imaging position.

In yet another aspect of this invention it provides diffuse light to further enhance the images produced by the practice of this invention. The diffuse light in one variation is provided by projecting it onto the cartridge case from a source of diffuse light. Such diffuse light can be provided by a specific source of such light. Another variation of this aspect of the invention calls for diffusing in part light projected onto the cartridge case for imaging purposes. A generally opaque but translucent light diffuser placed over the cartridge case partially diffuses the projected light.

According to the invention, there is also provided a method for imaging ejector mark on a cartridge case which comprises:
placing at an imaging position a cartridge case holding device for holding a cartridge case in a predetermined orientation for imaging;
positioning an imaging device so the optical axis is positioned to image the breech face of a cartridge case held by the holding device;
mounting a light source in a first predefined position for illuminating the cartridge case held by the holding device;
illuminating the cartridge case with the light source;
obtaining a first image with the imaging device;
removing the illumination by the light source;
mounting a light source in a second predefined position for illuminating the cartridge case held by the holding device;
illuminating the cartridge case with the light source;
obtaining a second image with the imaging device; and
using the images obtained for comparative analysis.

In a further aspect of the method of this invention the step of positioning the light source at the first and second predetermined positions includes positioning a first light source at the first predetermined position and positioning a second light source at the second predetermined position.

In a further aspect of the method of this invention the step of positioning the light source at the first and second predetermined positions includes moving a light source mounted for movement from the first to the second predetermined position.

In a further aspect of the method of this invention the step of positioning the light source at the first and second predetermined positions includes rotating the holding device, which has been mounted for rotational movement, from the first predetermined position to the second predetermined position.

In a further aspect of the method of this invention the step of positioning the light source at the first and second predetermined positions includes rotating the cartridge case, which has been placed in the holding device for rotational movement, from the first to the second predetermined position.

In a further aspect of the method of this invention the step of positioning the imaging device comprises positioning the optical axis of the imaging device so that it is perpendicular to the plane of the breech face of the cartridge case and centering the optical axis on ejector mark on the breech face of the cartridge case.

In a further aspect of the invention the step of mounting the first light source in the first predetermined position comprises mounting it in a tangential orientation to the ejector mark on the cartridge case and mounting the second light source in the second predetermined position comprises mounting it in a radial position to the ejector mark on the cartridge case.

In yet another aspect of the method of this invention, mounting the light sources includes mounting the first and second light sources such that their directional axes make an angle of approximately 30 degrees with the plane of the breech face of the cartridge case being imaged.

In yet another aspect of the method of this invention diffuse light is provided to better enhance the image produced by the practice of this invention. In one variation the diffuse light is provided by partially diffusing the directional light projected onto the image. In another variation diffuse light is provided by surrounding ambient light or by a separate light source provided for this purpose.

### BRIEF DESCRIPTION OF THE DRAWINGS

The invention will be better understood by way of the following detailed description of the preferred embodiment with reference to the appended drawings, in which:
Fig. 1 is a perspective view of the apparatus according to the preferred embodiment;
Fig. 2 is an overhead view of the apparatus of the preferred embodiment;
Fig. 3 is an overhead view of the cartridge holding device of the preferred embodiment with the two main plates of that device separated;
Fig. 4 is a cross sectional view of the cartridge holding device taken along line A A in Fig. 3;
Fig. 5A is a side view of a typical cartridge case;
Fig. 5B is a view of the top of the head of a cartridge case;
Fig. 6 is an overhead view of the cartridge case holding device set in the imaging position with partial views of the light sources and reference degrees indicate;
Fig. 7 is a perspective view of the a light diffuser used to practice one aspect of this invention;
Fig. 7A is a schematic view of the of the positioning of a sheet of the light diffuser in a preferred embodiment;
Fig. 8 is a perspective view of the apparatus of the preferred embodiment with the light diffuser positioned for use;
Fig. 9 provides a view of two additional embodiments of the subject invention;
Fig. 9A an overhead view an alternate embodiment of the holding device with the light source in a tangential orientation to the ejector mark;
Fig. 9B an overhead view of an alternate embodiment of the holding device with the light source in a radial orientation to the ejector mark;
Fig. 10 a schematic diagram of the major components of the invention;
Fig. 11A an overhead view of the holding device of the subject invention with the cartridge case in a tangential orientation to the light source;
Fig. 11B an overhead view of the holding device of the subject invention with the cartridge case in a radial orientation to the light source; and
Fig. 12 an overhead view of an alternative embodiment of the invention wherein the light source moves from the first to second predefined position.

### DETAILED DESCRIPTION OF THE PREFERRED EMBODIMENT

### 1. Overview

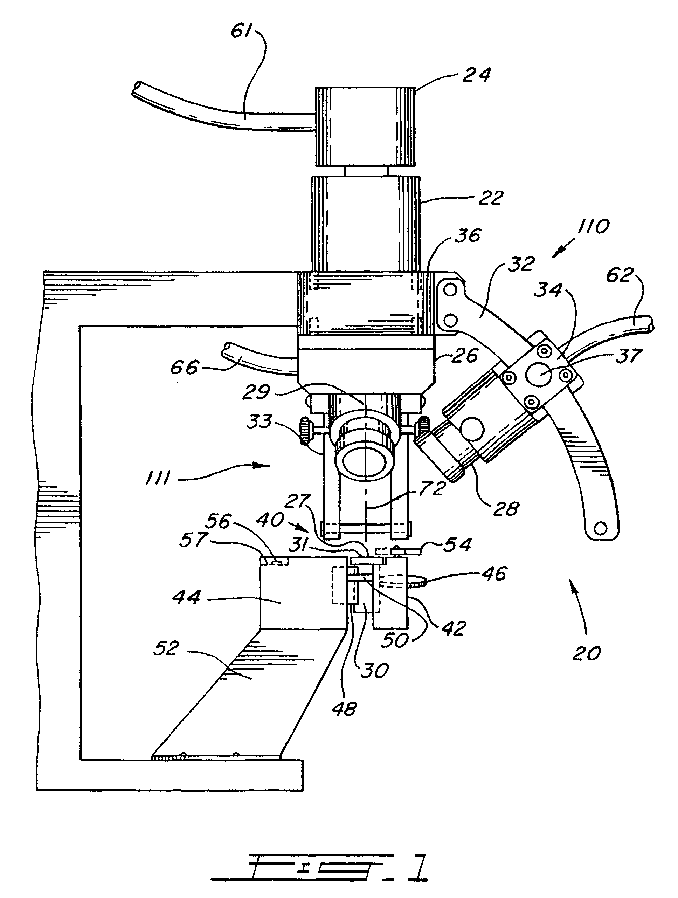

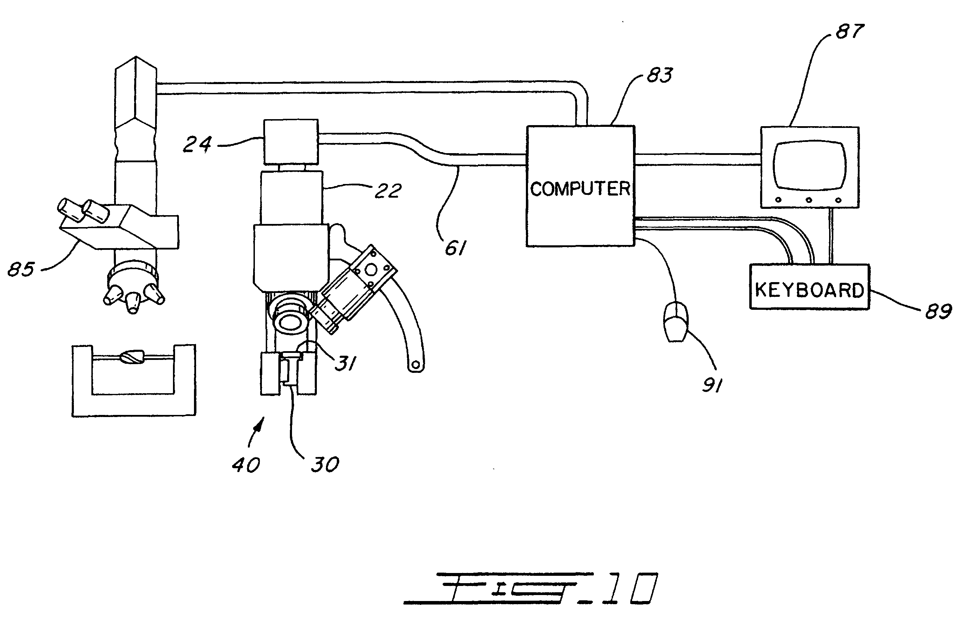

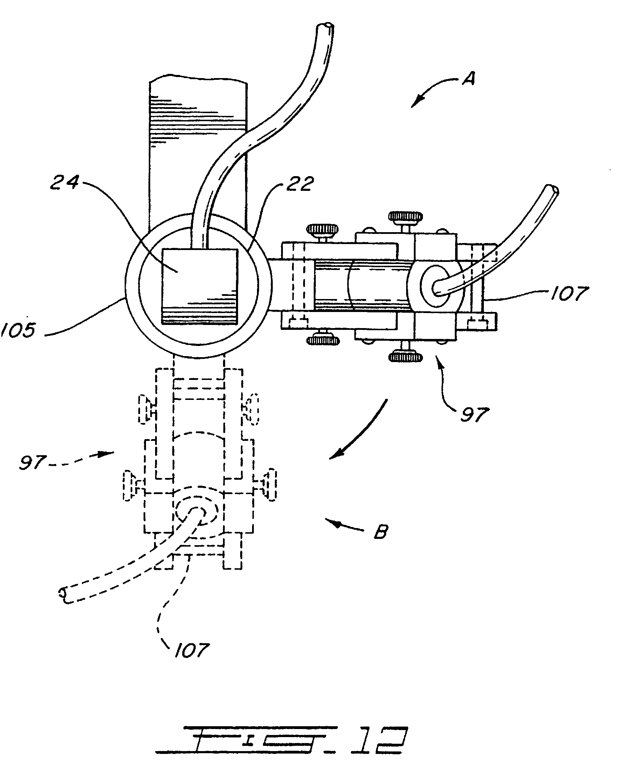

The overall apparatus of the system appears in Fig 1. The system includes a microscope 22 and an image capturing device 24, which in the preferred embodiment, is a standard charged coupled device 24 (CCD). In Fig. 1 the CCD 24 attaches to the microscope 22 which in turn is securely mounted by bracket 36. The microscope 22 is positioned to image surface 31, a breech face of a cartridge case 30. Cartridge case mounting block 40 holds the cartridge case 30 with the breech face of the cartridge case 31, at imaging position 27 facing the microscope 22. Cable 61 provides a control line as well as a power line for the microscope 22 and C.CD 24. Line 61, in the preferred embodiment, connects to both a computer 83 Fig. 10 as well as a microscope viewing apparatus 85. Images which the microscope 22 focuses on are fed to the CCD 24. In turn, the CCD 24 transmits those images to the computer 83 for imaging on a computer screen 87, as well as processing, analysis and storage. The operator, in a manner known in the industry, would use the computer 83 to control the overall operation of the system including adjusting the focus of the microscope 22 and movement and adjustment of the various parts of the apparatus as those movements are described herein. Since the preferred embodiment also provides an microscope viewing apparatus 85 Fig. 10 the operator also has the option of using this device to view the images and adjust the focus of the microscope.

Bracket 36 Fig. 1 connects to common base 68 for support. Common base 68, also has attached to it mounting plate 52 which securely holds plate 44 of cartridge case mounting block 40. Movable plate 42, of mounting block 40 attaches to the second plate 44, of mounting block 40. Plates 42 and 44 are securely but detachably biased towards each other by connectors 50 so that plates 42 and 44 can hold between them the cartridge case 30. Mounting block 40 which holds cartridge case 30 with its breech face 31 at imaging position 27 will be described in more detail at a later point in this description.

As will be described in more detail below, the key to the proper practice of this invention requires the establishment of a strict protocol for obtaining the images for comparative analysis. In brief, the images must be obtained under the same lighting conditions with the imaging device oriented in the same way with respect to the top of the head of the cartridge case. The lighting conditions require that the light for illumination be set in a predetermined position each time so that a directional axis of the light strikes the top of the head of that cartridge case at the same predefined angle each time. Two images are taken of each cartridge case with light provided at different predefined position and angle of illumination for the first and second image. The two imaging positions of the preferred embodiment of the various aspects of the invention being identified by reference numbers 110 and 111 in various of the figures. By following the teachings of the invention described herein one can obtain standardized images which highlight those aspects which differentiate the ejector mark of one firearm from another. Additionally, since the teachings of the invention provide for obtaining the images in a uniform manner, the predefined position and angle for each of the images always being the same, a ballistics expert can use the images of each cartridge case so obtained from different sources for comparative analysis.

In the preferred embodiment practice of the invention would consist of the following steps: 1. Placing the top of the head 31 of the cartridge case 30 at an imaging position 27; 2. mounting the imaging device 22 so that its optical axis is perpendicular to the plane of the top of the head 31 of the cartridge case 30 held at the imaging position 27; 3. illuminating the cartridge case for a first image by placing the light source 28 at a first predetermined position 110 Figs. 1, 9A and 11A so that the light source projects down at the top of the head of the cartridge case and strikes it at a predefined angle of illumination which makes in the preferred embodiment an approximately 30 degree angle with the top of the head of the cartridge case and is in a tangential orientation to the ejector mark; 4. illuminating the cartridge case for a second image by placing the light source 29 at a second predetermined position 111 Figs. 1, 9B, and 11B so that the light source projects down on the top of the head of the cartridge case and strikes it at a second predefined angle of illumination which makes an approximately 30 degree angle with the top of the head 31 of the cartridge case 30 and is in a radial orientation to the ejector mark on the cartridge case; and 5. Controlling or neutralizing ambient light and the intensity of the imaging light.

Once the images are obtained they are then stored on a suitable medium accessible in a useable form by a suitably programmed computer system 83 as depicted in Fig. 10 as is well know in the computer arts and used in conjunction with the invention described herein and the aforementioned and incorporated patents. The computer system would be programmed in such a fashion that a ballistics expert can display the images from different cartridge cases to be compared side by side, or otherwise, to allow the expert to determine if a possible match exists. A number of ways exist, well known to those skilled in the computer arts, which allow for storage and display of the images for the ballistics expert to compare and analyze the images from different cartridge cases.

### II. Object Illumination

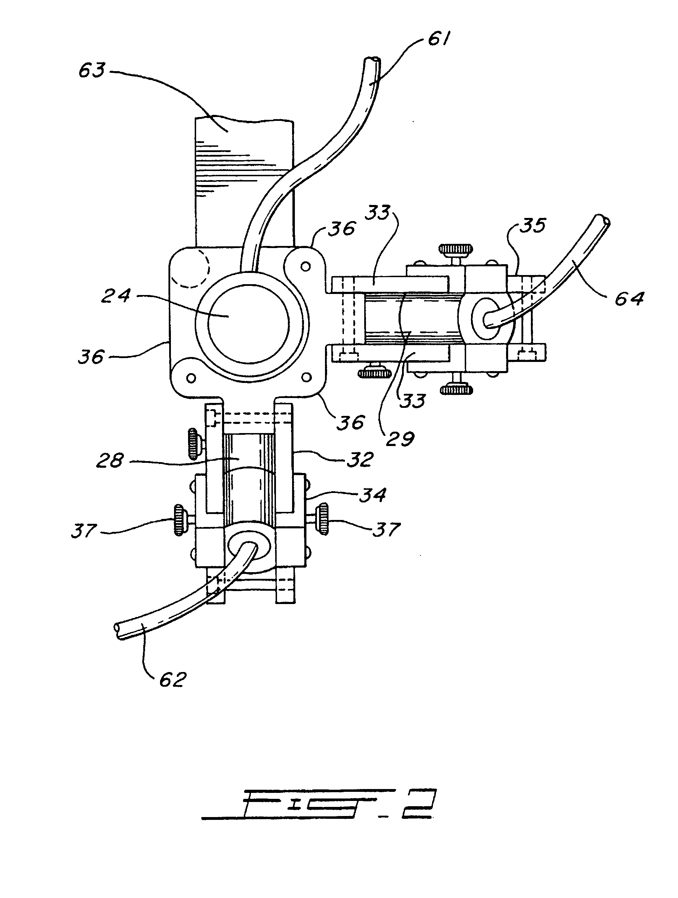

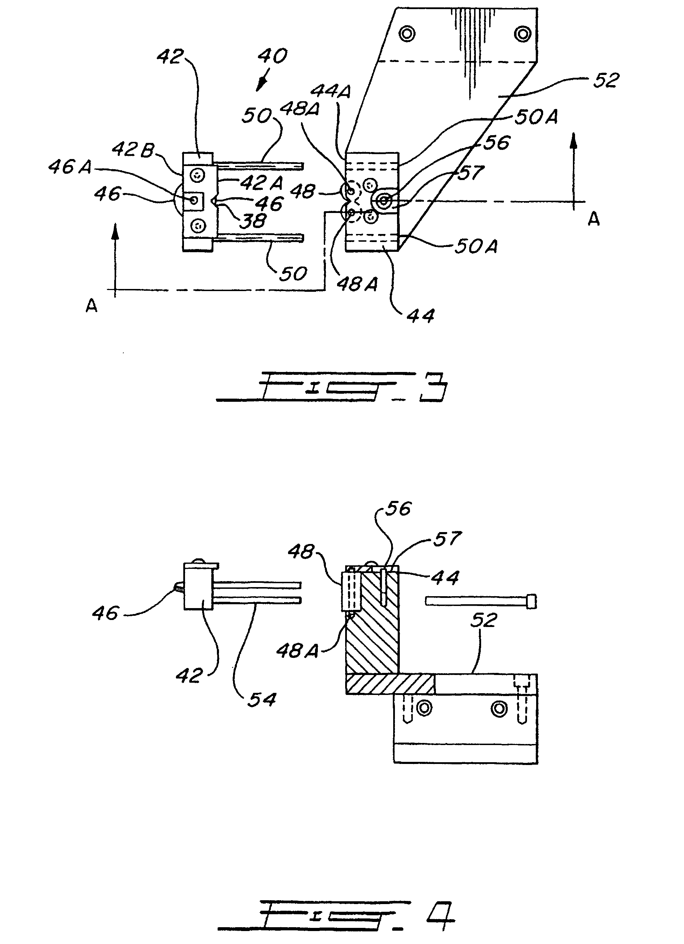

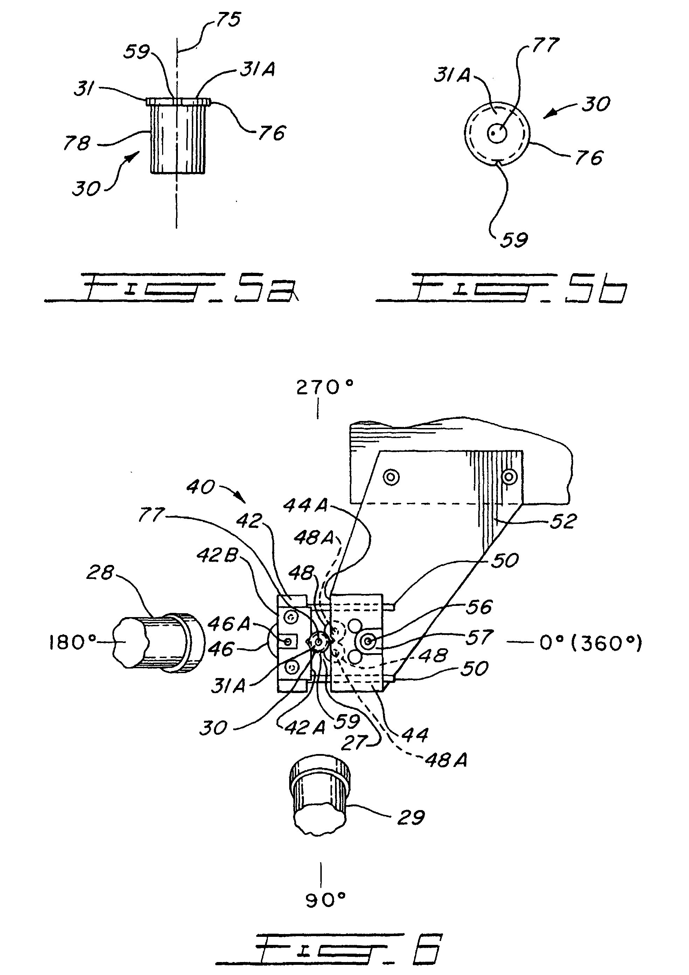

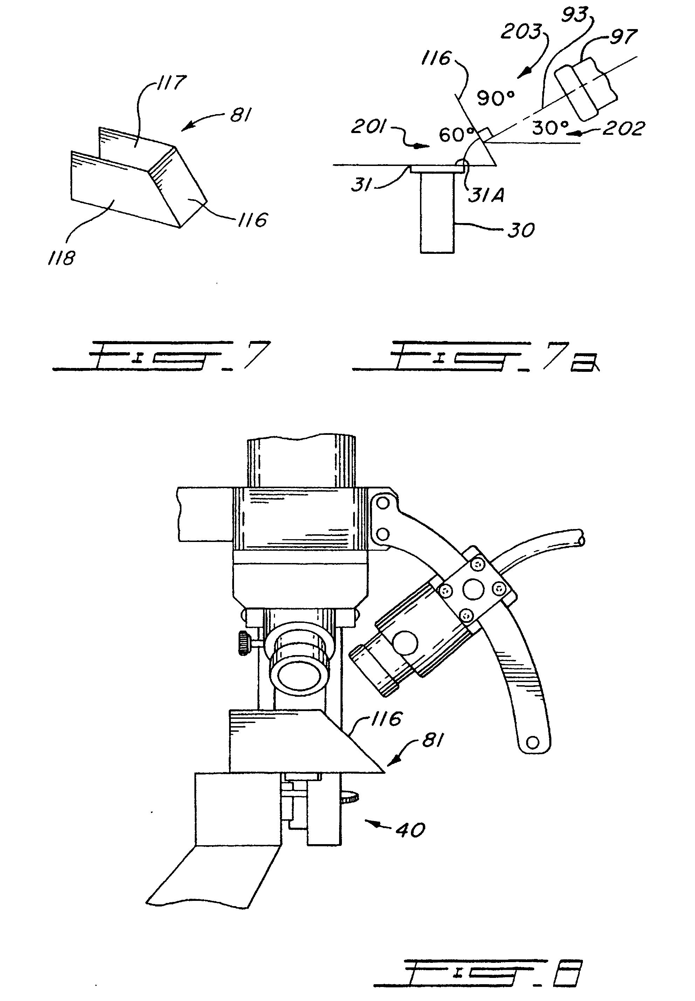

First light source 28 and second light source 29 provide illumination for taking appropriate images of the top of the head 31 of the cartridge case 30 Fig. 1 and 5B, specifically the ejector mark 59 Fig. 5B thereon. These light sources project beams of light not much bigger than the top surface 31 of the cartridge case 30. Both light sources 28 and 29 project beams of white light, provided in the preferred embodiment, through fiber optic cables 62 and 64 Figs 1 and 2, from a source of white light not shown.

Referring to Fig. 1 and Fig. 2 bracket 36 holds support arm 32 in position and bracket 34 attaches light source 28 to support arm 32. Support arm 32 and light source 28 are configured such that the directional axis of the first light source 28 (the direction axis being the axis along which a light source directs its beam of light) always points at imaging position 27. Knob 37 can be used to adjust bracket 34 and thus allow for movement of light source 28 along support arm 32. The arc of support arm 32 is configured such that the directional axis of light source 28 will always point at imaging position 27. The arc of support arm 32 forms the arc of quarter of a circle, the center of which is at the imaging position 27. Referring to Fig. 2 bracket 36 also holds support arm 33 in place, and bracket 35 holds the second light source 29 in place. Second light source 29 and support arm 33 are configured in the same fashion as first light source 28 and support arm 32, namely the directional axis of illumination of light source 29 would remain pointed at imaging position 27 as the operator moves light source 29 along support arm 33. Support arm 33 also describes an arc of a quarter of a circle whose center is located at imaging position 27. Cord 62 provides power for first light source 28 and is a fiber optic cable in the preferred embodiment depicted in Fig. 1. Likewise for second light source 29 a similar power cord, in this case a fiber optic cable 64 Fig. 2 provides the light.

The angle of the directional axis of the light source 28 makes with respect to the plane of the top 31A of the head 31 of cartridge case 30 can be varied from 0 degrees to almost 90 degrees. As noted above, adjustable bracket 34 allows for movement of light source 28 to achieve the desired angle. Fig. 1 depicts the preferred embodiment wherein the directional axis of light source 28 makes a predefined angle of approximately 30 degrees with the plane of the top of the head 31 of cartridge case 30.

Support arm 33 and light source 29 operate in a similar fashion as support arm 32 and light source 28, such that the direction axis of light source 29 can be varied anywhere from 0 degrees to 90 degrees with respect to the plane of the top of the head 31 of cartridge case 30. However, here again, the predefined angle of the directional axis of light source 29 to the plane of the top of the head 31, of cartridge case 30 for imaging the ejector mark is around approximately 30 degrees.

Fig. 2 provides a view of the entire system looking down from above. As can be seen, in the preferred embodiment the first light source 28 and second light source 29 are at right angles to each other. The best mode for the practice of the invention calls for the directional axis of light source 29 and light source 28 to be in an orthogonal position, 90 degree or perpendicular position to each other. This arrangement provides the optimal images. It is also possible to obtain usable images with the light sources 28 and 29 at a different angle to each other. In that case, various apparatuses can be used to allow an operator to vary the angle between light source 28 and 29. Several variations are discussed below.

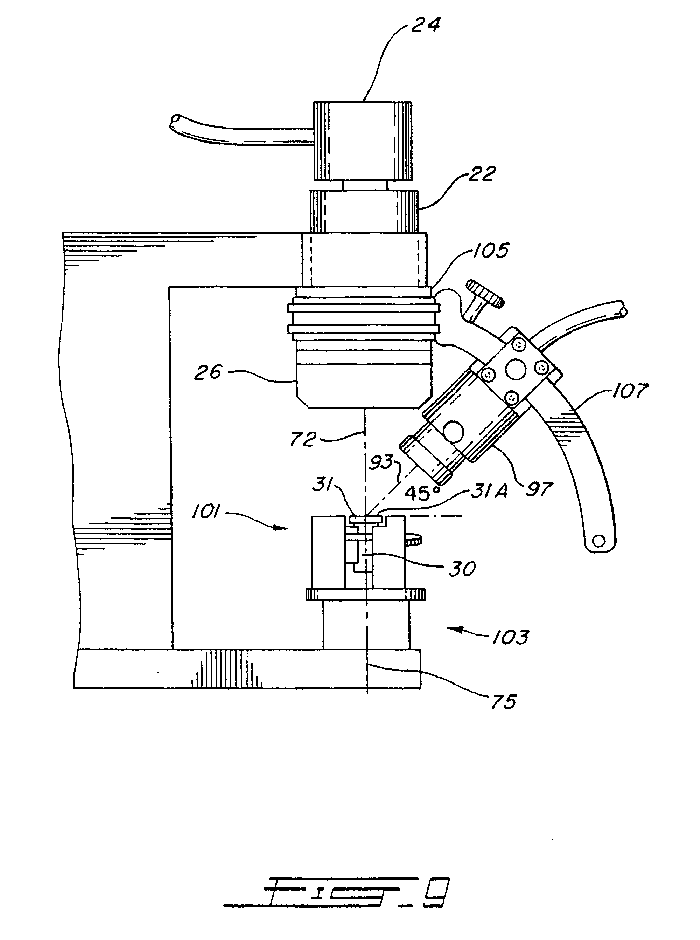

As noted above, proper practice of the invention requires the establishment of a strict and uniform protocol for taking each of the images for comparison and analysis. Two images must be taken of each cartridge case with the optical imaging device in the same position with light for illumination provided from two different but standard predefined angles. The light source being set in two different but standard predetermined positions for each image taken of each cartridge case for the comparative analysis of all cartridges cases imaged. The two predetermined positions allow for the establishment of two predefined angles of illumination one for each of the two images taken as part of the process. Referring to Figs. 1 and 6 the predetermined position of the preferred embodiment is to position light sources 28 and 29 so that their directional axis are at right angles to each other and they both make an angle of approximately 30 degrees with the plane of the breech face 31 of the cartridge case 30. More particularly, in the preferred embodiment the first predefined angle will have the directional axis of the first light source projecting down at about a 30 degree angle to the plane of the top of the head 31 of the cartridge case 30 in a tangential direction to the ejector mark. The second predefined angle will have the second light projecting down at about a 30 degree angle to the plane of the top of the head 31 of cartridge case 30 in a radial direction to the ejector mark Thus with each successive cartridge case this same protocol must be followed to create the necessary and distinct but comparable images necessary for comparative analysis by a ballistics expert.

Fig. 6 has marked thereon as a reference frame in the plane of the top of the head 31 of cartridge case 30, the degrees of a circle with its center at the center of the breech face 31 of the cartridge case 30 where the longitudinal axis 75 of the cartridge case 31 crosses the plane of the top of the head 31. In Fig. 6 the plane 31 is the paper surface and axis 75 would be projecting out of the paper at the firing primer 77 position perpendicular to the paper. With the center of the circular top of the head of cartridge case 30 at 77, the ejector mark 59 and imaging position 27 would be on the edge of the circle which forms the top of the head 31 of cartridge case 30. Thus, the directional axis of the second light source 29 projects in a radial direction towards imaging position 27 at the ejector mark 59, passing from the 90 degree position to the 270 degree position. The directional axis of the first light source 28 would project on the imaging position 27 in a tangential direction to ejector mark 59 passing from the 180 degree position to the 360 or 0 degree position. Naturally, as noted above, the predetermined position of the preferred protocol would include projecting the light from light sources 28 and 29 towards imaging position 27 so their directional axis intersect the plane of the breech face 31 at approximately 30 degrees. Additionally, the protocol of the preferred embodiment also includes control of the intensity of the light source, diffusing that light and neutralization of ambient light from the surroundings of the apparatus which will be discussed in detail below.

Although, the invention calls for a preferred embodiment with the first and second predefined angles of illumination set at approximately 30 degrees to the plane of the top of the head or breech face 31 of cartridge case 30 and in either a radial or tangential direction the preferred protocol could be modified and the invention still practiced. The angular relationship between the axis of illumination of light sources 28 and 29 could be varied from an angle of more or less than 90 degrees. Conceivably, it could be varied over a range of from 1 to 179 degrees although anything much more than several degrees greater or less than the orthogonal or 90 degree relationship between the first predetermined position and the second predetermined position in reality is impractical. Also, the first and second predefined angles could be varied from the 30 degree angle practiced in the preferred embodiment. Here again conceivably it could be varied from a position where the directional axis makes an angle of a few degrees with the plane of the top of the head of the cartridge case to close to a 90 degree angle with the plane of the top of head of the cartridge case. However, for all practical purposes once you change that angle more than several degrees greater or lesser than the approximately 30 degrees of the preferred embodiment, in reality, it becomes impractical if not impossible to practice the concept of the invention. Finally, once you set the protocol for the practice of this invention it is absolutely imperative that all images to be compared be taken with the light sources at the same angles under exactly the same lighting conditions. Failure to follow the same protocol for taking the images for each successive cartridge case make it difficult to practice the invention. Also, as will be noted in detail below, the preferred embodiment also calls for the introduction of diffuse light to further enhance the quality of the image and increase the texture and definition of the image obtained. The more detailed statement below will describe how the light from the light sources can be partially diffused or separate diffuse light can be introduced to create the desired effect.

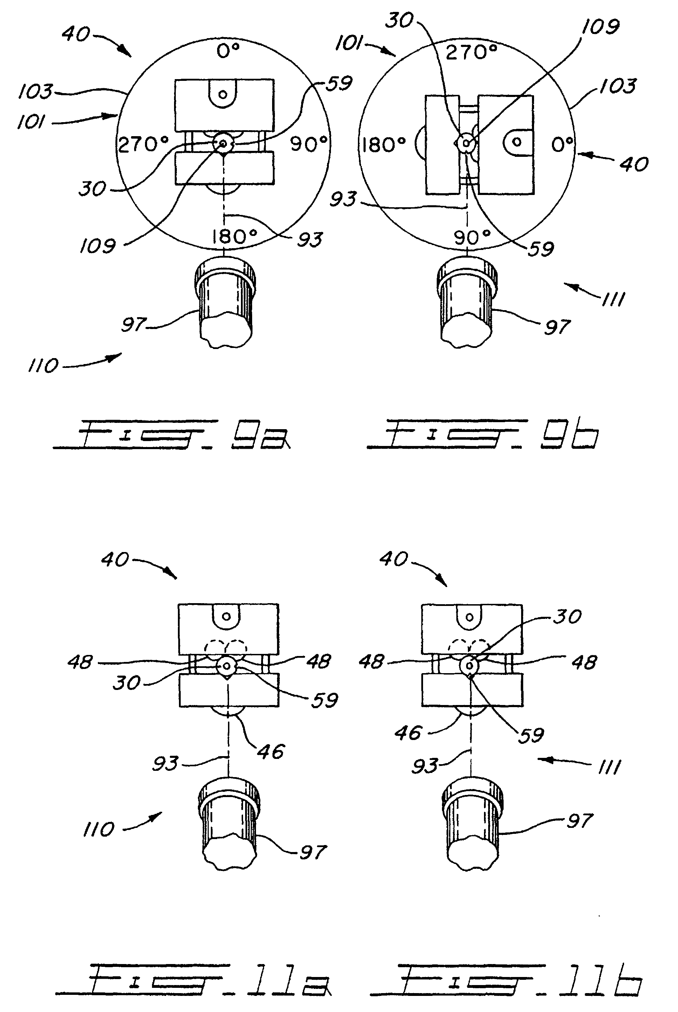

Although the preferred embodiment described above uses two separate light sources to provide the illumination necessary, other arrangements exist which can accomplish the object of this invention. Fig. 9 depicts three alternative versions for providing illumination for taking images of the cartridge case with light from the first and second predetermined position of illumination. All can be used individually or together to accomplish the desired result. The first alternative as depicted in Fig 12 provides for movement of the light source 97 from the first predetermined position A for illumination for the first image to the second predetermined position B to illuminate the cartridge case for the second image. In this version, light source 97 attaches to support arm 107 which in turn attaches to rotating mechanism 105 Fig. 12. Thus, light source 97 could be positioned at the first predetermined position as depicted by light source 28 at the tangential position in Fig. 6 and then rotated by the rotating mechanism 105 Fig. 12 to the second predetermined position as depicted by light source 29 at the radial position in Fig. 6. In this manner two images of the ejector mark could be obtained with light from the first predetermined position of illumination and then the second predetermined position of illumination. As depicted in Fig. 9 lights source 97 is held securely by arm 107 in a position where its directional axis 93 forms a 30 degree angle with the plane 31A of the top of the head 31 of cartridge case 30. This angle would be maintained as light source 97 is rotated from the tangential orientation of the preferred embodiment to the radial orientation of the preferred embodiment. Rotating mechanism 105 is a fairly standard mechanical device.

A second alternative depicted by Fig. 9 calls for securing a single light source 97 in a fixed position and rotating the cartridge case holding device 101. Cartridge case holding device 101 sits on rotating stage 103. The cartridge case 30 is at the center of the stage with the axis of rotation of the stage 103 being congruent with the longitudinal axis 75 of the cartridge case 30 when the cartridge case 30 is positioned on the stage between the plates of the holding device 101. Thus, rotating stage 103 rotates everything on it about the longitudinal axis 75 of cartridge case 30. As depicted in Fig. 9A and 9B the longitudinal axis 75 intersects at point 109 the top of the head 31 of cartridge case 30 and is perpendicular to the top of the head 31 of cartridge case 30, axis 75 is thus perpendicular to the plane Figs. 9A and 9B projecting out from them. As depicted in Figs. 9A and 9B as rotating stage 103 rotates through 90 degrees from Fig. 9A to 9B the position of directional axis 93 of light source 97 crosses the cartridge case 30 from the 180 degree tangential position with respect to ejector mark 59 in Fig. 9A to the 90 degree radial position with respect to ejector mark 59 in Fig. 9B. Thus, the appropriate illumination at the first and second predetermined positions of illumination are obtained by rotating Rotating Stage 103. However, when you rotate stage 103 to reposition the cartridge case with respect to the light source, ejector mark 59 moves away from the imaging position 27 and the focal point of the microscope 22. Thus an additional translational move of the stage 103 is necessary to reposition the ejector mark 59 back at imaging position 27. Those skilled in the art will realize that repositioning of stages 103 can be easily accomplished given the general configuration of the available apparatus. Thus, given the need for the repositioning of the cartridge case to place it back at the imaging position 27, in most applications, moving from the first predetermined position to the second predetermined position when using the Rotating stage 103 would include this additional translational move.

Figs. 11A and 11B provide a third alternative for orientating the ejector mark on the top of the head 31 of cartridge case 30. In this alternative, a roller mechanism consisting of rollers 48 and thumb wheel 46 allow the operator to orientate the ejector mark 59 on the cartridge case 30 top head 31 to the tangential position with respect to directional axis 93 of light 97 as depicted in Fig. 11A and the radial position with respect to directional axis 93 of light 97 as depicted in Fig. 11B. The roller mechanism consisting of rollers 48 and thumb wheel 46 will be described in detail below. Here again, rotating cartridge case 30 moves ejector mark 59 away from the imaging position 27. Thus, an additional translational move of cartridge mounting block 40 is necessary to reposition ejector mark 59 back at the imaging position 27. Those skilled in the art will realize such a repositioning of cartridge mounting block 40 can be easily accomplished with available devices. Given the need for the repositioning of the cartridge case 30 to place it back at the imaging position 27, in most applications, moving from the first predetermined position to the second predetermined position by rotating cartridge case holding device 40 would include an additional translational move to effectuate the repositioning.

### III. The Cartridge Case

Fig. 5 A and B depict the standard cartridge case 30, which would be imaged by the system. The cartridge case as depicted in Fig. 5A has a head 31, a rim 76 and casing jacket 78. Cartridge case 30 also has a longitudinal axis 75 which runs up through the center of cartridge case 30. As noted above, it is common knowledge in the industry that every firearm leaves an ejector mark on the cartridge case which are singular to that particular firearm. Referring now to Fig. 5B therein a view toward the top 31 A of the head 31 of the cartridge case 30 appears. The firing pin mark 77 is located thereon at the center. Additionally, the ejector mark 59 appears thereon in the usual position, on the edge or the rim 76.

### IV. The Cartridge Case Mounting Block

Cartridge case mounting block 40 Fig. 1 and its structure and use, will now be described in more detail. Cartridge case mounting block 40, as previously noted, has two parts, a first movable plate 42 which attaches to the second fixed plate 44. Referring to Fig. 3,4, and 6, as depicted therein, first plate 42 can be biased towards and detachably connected to plate 44 by shafts 50. Shafts 50 fit into channels 50A bored through plate 44 for this purpose. Connector devices that are known in the art, allow the operator of the system to detachably connect plate 42 to 44. Referring back to Fig. I and 6 plate 42 and 44 hold between them cartridge case 30.

Referring now to Fig. 6 the preferred embodiment has a mechanism to rotate the cartridge case 30 around its longitudinal axis 75 when the case is secured between plates 44 and 42. The purpose of rotating case 30 is to position the cartridge case 30 to place the ejector mark 59 on the top of the head 31 in the correct orientation for taking each of the images. Cartridge case 30 is held in place by three rollers. Two of the rollers, rollers 48 are partially imbedded in plate 44 on its face side 44A. One roller, roller 46 is imbedded in plate 42. The axis of rotation of each of the rollers is generally parallel to each other. Rollers 48 each have their own axial mechanisms 48A, well know in that art, which act as axis of rotation for each, allowing rollers 48 to freely rotate about that axis. When plate 44 is positioned for holding an object at imaging position 27 the axial mechanisms 48A for rollers 48 and thus their axis of rotation are parallel to the optical axis of the microscope 22.

Roller 46, in the preferred embodiment, is actually a thumb wheel which projects out of both sides of plate 42. Thumb wheel 46 has an axial mechanism 46A, which forms its axis of rotation and about which it freely rotates. Fig. 3 provides another exploded view of cartridge case mounting block 40. As can be seen, the face side 42A of detachable plate 42 has a V shaped channel 38 which runs down its face in a direction parallel to the axis of rotation 46A of thumb wheel 46. The portion of thumb wheel 46, which projects out of side 42B of plate 42 exposes enough of its rim for manual manipulation by an operator. The portion of wheel 46 which projects through to V channel 38 on the face of side 42A comes into contact with the cartridge case 30 and securely holds cartridge casing 30 when plate 42 on its face side 42A is detachably biases towards the face side 44A of plate 44 which has roller pair 48 projecting from it. Rollers 48 obviously hold cartridge case 30 from the opposite side. In fact, the cartridge case 30, in the preferred embodiment, would only come in contact with rollers 48 and thumb wheel 46 and thus the three rollers would securely hold cartridge case 30 for positioning and imaging. It will be readily seen by those skilled in the art that automated drive and control mechanisms could be incorporated into the holding device and the roller mechanisms in place of the thumb wheel. This would obviously provide for automated control of the rollers to orientate the cartridge case 30 specifically the ejector mark 59 on the top 31A of head 31 for imaging.

Thumb wheel 46 is built into plate 42 in a manner well know to those skilled in the art to allow it to be manipulated by the operator with tactile means on side 42B opposite the cartridge case 30 and thus allow the operator to rotate the cartridge case about its longitudinal axis 75. Longitudinal axis 75 as noted above passes through the center of the top 31 of cartridge case 30 and is parallel to the face sides 42A and 44A of plates 42 and 44 respectively when the cartridge case 30 is held by the rollers 48 and thumb wheel 46 between those plates. Thus, by manipulating thumb wheel 46 the operator can rotate the cartridge case 31 about its longitudinal axis and thus position ejector mark 59 in the appropriate position, in this case, at imaging position 27 for imaging. In the preferred embodiment depicted in Fig. 6 the 90 degree position is the precise imaging position 27 to which ejector mark 59 would be rotated for imaging. Microscope 22 Fig. 1 would focus on this point and magnify it appropriately for imaging by the CCD 24.

Referring now to Fig. 1, the top of plate 42 has a retaining or stopping plate 54. Retaining or stopping plate 54 is slidably connected to plate 42 so that it can be moved into a position in which blocks the movement of shell 30 in a longitudinal direction towards the microscope. After cartridge case 30 is properly positioned as described in more detail below plate 54 can be slid back out of the way to allow for complete viewing and imaging of the top 31 of the cartridge case 30.

In order to promote movement of the cartridge casing along its longitudinal axis towards the microscope, thumb wheel 46 has an axis of rotation which is set at an acute angle to the axis of rotation of rollers 48. In fact, if the two axis of rotation of rollers 48 were used to form an imaginary plane, the axis of rotation of thumb wheel 46, if projected in an imaginary line beyond its lower side, would cross at an acute or very slight angle the imaginary plane formed by the two axis of rollers 48. In the preferred embodiment this angle would be approximate 5 degrees. As can be seen, the positioning of thumb wheel 46 at an acute angle in effect, tilts the axis of thumb wheel 46 slightly away from the rotational axis of rollers 48 and the optical axis 72. Thus, by setting the angle of rotation of thumb wheel 46 at a slightly acute angle, and thus tilting it, turning thumb wheel 46 promotes movement of the cartridge case 30 in a direction along its longitudinal axis 75 towards the microscope 22. Thus, retaining or stopping plate 54 when moved into its blocking position would stop the longitudinal movement of cartridge case 30 along its longitudinal axis 75 and assist in appropriately positioning the cartridge case 30 at the correct imaging position 27. Upon completion of this maneuver, the operator then can move retaining plate 54 back out of the way to reveal the full view of the top 31A of the head 31 of cartridge case 30. Naturally, complete positioning of cartridge case 30 would include rotating the ejector mark 59 into the 90 degree position depicted on Fig. 6.

### V. Ambient Light, Diffuse Light and Intensity of the Imaging Light

Not only must the images be taken with light projected from the appropriate angles but ambient light should be neutralized, diffuse light provided and the intensity of the lighting sources used to image the ejector mark adjusted so that the conditions are the same each time an image is taken. Excessively intense lighting can create glare and ruin the image obtained. Also, ambient light from the surroundings where the imaging takes place can corrupt the resulting images with excessive light and spurious shadows. Finally, and of considerable importance sufficient diffuse light must be provided to produce fully textured images with as many significant features illuminated to aid the expert in his analysis and comparison of the cartridge cases imaged. Purely directional light is too powerful and creates too much of a contrast from one direction. Additionally, most cartridge cases tend to be made of shinny brass which can create glare and wash out significant features on the top 31 of the head of the cartridge case 30. By adding generally diffuse light in combination with the directional lighting and the control of the intensity of the lighting the operator can obtain a much richer image and can see much more of the distinguishing features of the cartridge case or object imaged. The diffuse light allows one to generally see the object and its features while the directional lighting enhances certain features depending on the direction from which you project it. The optimal angles and positions from which to provide the directional light to produce suitable images for comparison and analysis being described elsewhere in this description. In the preferred embodiment the directional lighting would generally be the dominant light illuminating the ejector mark on the top of the cartridge case.

The invention provides a number of ways to achieve the desired lighting results. One method combines the directional lighting, as described above, provided by light sources 28 and 29 Figs. 1, 2 etc. used in combination with ring light 26 Fig. 1. Ring light 26 would illuminate the object with axial symmetric lighting generally projected down at the top 31 of the cartridge case 30 in a diffuse pattern. In a further enhancement of this variation light intensity controls, well known in the art, can be used to control the intensity of the light produced by the ring light source 26 and directional light sources 28 and 29. To further enhance this variation a shroud placed around the lighting sources and cartridge case mounting block 40 to exclude or at least control ambient light can prove helpful in some instances. Naturally, other types of light sources placed in appropriate positions around the cartridge case could also provide the diffuse light.

However, the preferred embodiment of this invention, because of the ease of use, employs a light diffuser 81 as depicted in fig. 7. The diffuser 81, in the preferred embodiment, would fit over the cartridge case mounting block 40 as depicted in Fig. 8. The diffuser 81 places translucent opaque sheets 116 and 117 between light source 28 and 29 and the cartridge case 30 or the object to be imaged. The sheets, so placed filter out ambient light and compensate for the intensity of each of the light sources 28 and 29. This variation of the invention would most likely not use or need ring light 26. In the preferred embodiment, depicted in Fig. 8, sheet 116 of the diffuser faces the light source 28 and is approximately perpendicular to the directional axis of light source 28. Likewise sheet 117 of the diffuser 81 faces the light source 29 and is approximately perpendicular to the directional axis of light source 29. Also, the diffuser as depicted in Figs. 7 and 8 encloses most of the area surrounding the imaging position 27, thus excluding effects of ambient light and spurious shadowing it can cause. The opaqueness of the sheets of the diffuser could be varied from being slightly frosted and almost clear, to relatively translucent or to generally opaque depending on the contrast one wants to achieve by emphasizing or de-emphasizing either the directional lighting coming directly from 28 and 29 and the diffuse light created by the light diffuser 81. The less frosted and thus clearer the sheets the more you emphasize the direct directional light and the more heavily frosted opaque and translucent the sheets the more you emphasize the diffuse light created by the diffuser. In the preferred embodiment the diffuser is substantially opaque making it generally cloudy and translucent. This is to provided substantial diffuse light but it still leaves the direct directional light more predominate.

Fig. 7A depicts the arrangement of one sheet of the light diffuser 81 in the preferred embodiment. Generally, sheet 116 makes an angle 201 as depicted in Fig. 7A of 60 degrees with the plane 31A of the top 31 of the cartridge case 30. The directional axis 93 of light source 97 then strikes the sheet 116 of the diffuser at a right angle 202. Thus, the angle 202 directional axis 93 makes with the plane 31A of the head 31 of cartridge case 30 is 30 degrees, line 205 being parallel to plane 31A. This is in conformance to the requirement that the directional axis of the light source strike the top 31 of the cartridge case 30 at an angle of 30 degrees.

### VI. Operation of the System

As depicted in Fig. 1 cartridge case 30 would be securely placed in cartridge case holding block 40 as described above, with the top 31A of the head 31 directed at microscope 22. The operator would then move plate 54 to a blocking or stopping position and then manipulate with thumb wheel 46 to move the cartridge case 30 into the appropriate position. Cartridge case 30 would move along its longitudinal axis 75 towards microscope 22 until stopped by plate 54 now in the blocking position. In the preferred embodiment, the operator would make sure that the ejector mark 59 are set in the 90 degree position as indicated in Fig. 6. This would place the cartridge case 30 and the top 31A of head 31 in the ideal imaging position 27 with the ejector mark 59 in the correct orientation. Next light diffuser 81 would be placed in position as depicted in Fig. 8. In the preferred embodiment light source 29 would be in the radial position at an angle of approximately 30 degrees with the plane of the top 31 A of the head 31 and light 28 would be in the tangential position at an angle of approximately 30 degrees with the plane of the breech face. The first image would be taken with light source in the first predetermined position illuminating the imaging position 27. Then a second image would be taken with only the light source in the second predetermined position. Referring to Fig. 10 at each position of illumination the image relayed by microscope 22 to the CCD device 24 would be transmitted to a computer 83 which would process it and then store the information and have it available for appropriate imaging and comparative analysis when needed. The operator would control the computer through the usual means by keyboard 89 and mouse 91.

### VII. Calibration

Finally, in the initial set up, a calibration step would be taken. Referring to Figs. 1 and 6 The microscope 22, and CCD 24, would be calibrated on calibration point 56 set in depression 57 on plate 44. Calibration point 56 is in fact the end of a cylinder with a known internal and external circumference and predetermined distance between the internal and external circumference. Keying on these factors the microscope 22 can be calibrated both for focusing and precise magnification before the start of an imaging sequence. The stage of the microscope 22 is controllable for movement in the X-Y plane in a manner known to those skilled in the art. This would then provide for movement of block 40 into a position where the microscope 22 can focus on point 56 for calibration. After completion of the calibration step the microscope 22 would be repositioned over imaging position 27 for the imaging process.

### VIII. Conclusion

Thus the invention described herein provides a standardized and systematized process and apparatus for acquiring images of ejector mark on cartridge cases, which images can be stored on a suitable medium, in the case of the preferred embodiment a computer memory system, for later use in comparative analysis by a ballistics expert. The apparatus and method allow the ballistics expert to compare the ejector mark on a cartridge case with the ejector mark on other cartridge case from a multitude of locations without having to reimage the actual cartridge cases each time. The apparatus and method allow the ballistics expert to rely on a trained technician to actually do the imaging and to store the images for later use by the expert.

While the invention has been particularly shown and described with reference to preferred embodiment thereof, it will be understood by those skilled in the art that various changes in form and detail may be made therein without departing from the scope of the invention, in the sense of the appended claims.

## Claims

1. An apparatus for imaging an ejector mark (59) on a cartridge case (30) comprising:
a cartridge case holding device (40) mounted to hold, in a predetermined orientation for imaging, a cartridge case (30) at an imaging position (27);
an imaging device (22, 24) mounted with an optical axis (72) of said imaging device positioned to image a top of a head of the cartridge case (30) at the imaging position (27);
a first light source (28) mounted in a first predetermined position for illuminating the cartridge case (30) held by the holding device (40) at a first predefined angle for obtaining a first image by the imaging device (22, 24) ;
a second light source (29) mounted in a second predetermined position for illuminating the cartridge case (30) held by the holding device (40) at.a second predefined angle for obtaining a second image by the imaging device (22, 24); and
the holding device (40), the first and second light sources (28; 29) and the imaging device (22, 24) cooperating so that the imaging device can take a first image of the object with light for illumination from the first predefined angle of illumination and a second image of the object with the light from the second predefined angle of illumination;
whereby the images obtained can be used for comparative analysis;
**characterized in that** the holding device (40), the first and second light sources (28; 29) and the imaging device (22, 24) are adapted such that said cooperating is selected from the group consisting of
(a) rotating the holding device (40) to position the cartridge case (30) at the first predetermined position of illumination and rotating the holding device to position the cartridge case at the second predetermined position of illumination;
(b) rotating the cartridge case (30) to position the cartridge case at the first predetermined position of illumination and rotating the cartridge case to position the cartridge case at the second predetermined position of illumination; or
(c) moving said first light source (28) to said second predetermined position, wherein said first light source (28) is said second light source (29).

2. The apparatus as claimed in claim 1, wherein the predefined angle a directional axis of the light source (28, 29) makes with respect to a plane of a top of a head of the cartridge case (30) held by the holding device (40) at the imaging position (27) can be at any one angle in a range of from 1° to 90°.

3. The apparatus as claimed in claim 1 or claim 2, wherein the predefined angle a directional axis of the light source (28, 29) makes with respect to a plane of a top of the head of the cartridge case (30) held by the holding device (40) at the imaging position (27) in a predetermined orientation is approximately 30°.

4. The apparatus as claimed in one of claims 1 to 3, wherein the optical axis (72) of the imaging device (22, 24) is perpendicular to the plane of a top of the head of the cartridge case (30) held by the holding device (40).

5. The apparatus as claimed in one of claims 1 to 4, wherein an optical axis (72) of the imaging device (22, 24) is centered on an ejector mark (59) on a top of the head of the cartridge case (30).

6. The apparatus as claimed in one of claims 1 to 5, wherein a directional axis (93) of the light source (28, 29) at the first predetermined position for imaging is in a tangential orientation to the ejector mark (59) on the cartridge case (30) and the directional axis of the light source (28, 29) at the second predetermined position for imaging is in a radial orientation to the ejector mark (59) on the cartridge case (30).

7. The apparatus as claimed in one of claims 1 to 6, wherein the angle between a directional axis (93) of the light source (28, 29) at the first predetermined position and the directional axis (93) of the light source (28, 29) at the second predetermined position for imaging purposes can be any one angle in a range of from 1° to 179°.

8. The apparatus as claimed in one of claims 1 to 7, wherein the angle between a directional axis of the light source (28) at the first predetermined position and the directional axis of the light source at the second predetermined position (29) is 90°.

9. The apparatus as claimed in one of claims 1 to 8, wherein the holding device (40) comprises a first plate (42) with a face side (42A) and a second plate (44) with a face side (44A) and the plates being detachably biased towards each other on their face sides so that they securely hold there between a cartridge case (30) with a longitudinal axis of the cartridge case approximately parallel to the face of the first plate (42) and the face of the second plate (44) so that a top of the head of the cartridge case is in the imaging position (27).

10. The apparatus as claimed in claim 9, wherein the holding device (40) comprises further means to rotate the cartridge case (30) about its longitudinal axis (75).

11. The apparatus as claimed in claim 10, wherein the rotating means comprises at least one roller (46) on the face of the first plate (42) and two rollers (48) on the face of the second plate (44), the axis (46A, 48A) of rotation of all of the rollers being substantially parallel to each other, and the rollers being placed such that when the faces of the plates (42, 44) are joined together the rollers (46, 48) can securely hold there--between the cartridge case (30), with the longitudinal axis (75) of a cartridge case (30) parallel to the axis of the rollers so that the rollers can also rotate the cartridge case (30) about its longitudinal axis (75).

12. The apparatus as claimed in claim 11, wherein the roller (46) on the face of the first plate (42) comprises a thumb wheel accessible to and manipulatable by a human hand so that the cartridge case (30) can be manually rotated about its longitudinal axis (75).

13. The apparatus as claimed in claim 11, wherein the rollers (46, 48) have a drive and control mechanism for rotation of the cartridge case (30) about its longitudinal axis (75).

14. The apparatus as claimed in one of claims 11 to 13, wherein the axis of rotation (46A) of at least one of the rollers (46) is set at an acute angle to the others to allow for movement of the cartridge case (30) along its longitudinal axis (75).

15. The apparatus as claimed in claim 14, wherein when the axis of rotation (46A) of the at least one roller (46) set at an acute angle is extended in a direction opposite and away from an imaging side of the holding device (40) intersects a plane formed by the axis (48A) of rotation of the two other rollers (48), the cartridge case (30) held in the holding device (40) moves along its longitudinal axis (75) towards the imaging side of the holding device (40) on rotation of the rollers (46, 48).

16. The apparatus as claimed in claim 15, wherein the holding device (40) further comprises a plate (54) slidably attached to its imaging side with the plane of the plate perpendicular to the longitudinal axis (75) of the cartridge case (30) held by the holding device (40), the plate (54) being attached for movement between a blocking position where it stops the longitudinal movement of the cartridge case (30) to a retracted non-blocking position.

17. The apparatus as claimed in one of claims 1 to 16, further comprising a light diffuser (81) placed between the light source (28, 29) and the cartridge case (30) so that when the first and second images are taken some of the projected light is diffused around the cartridge case (30).

18. The apparatus as claimed in claim 17, wherein the light diffuser (81) comprises a detachable shield cover of translucent material which fits over and at least partially covers the imaging position.

19. The apparatus as claimed in one of claims 1 to 18, further comprising a diffuse light source placed to project diffuse light onto the cartridge case (30).

20. The apparatus as claimed in claim 19, wherein the diffuse light source comprises a ring light.

21. The apparatus as claimed in one of claims 1 to 20, further comprising: an object with known dimensions preset at a calibration point for imaging and calibration by the imaging device (22, 24).

22. A device (40) for holding and positioning a cartridge case (30) for imaging
**characterized by**
a first plate (42) with a face side (42A) and a second plate (44) with a face side (44A) the plates being detachably biased towards each other on their face sides so that they securely hold therebetween a cartridge case (30) with a longitudinal axis (75) of the cartridge case (30) approximately parallel to the face (42A) of the first plate (42) and the face (44A) of the second plate (44) so that the top of the head of the cartridge case (30) is in an observable position (27) and means to rotate the cartridge case (30) about its longitudinal axis (75).

23. The apparatus as claimed in claim 22, wherein the rotating means comprises: at least one roller (46) on the face of the first plate (42) and two rollers (48) on the face of the second plate (44), the axis of rotation (46A, 48A) of all of the rollers (46, 48) being substantially parallel to each other, and the rollers being placed such that when the faces (42A, 44A) of the plates (42, 44) are joined together the rollers can securely hold therebetween a cartridge case (30), with the longitudinal axis (75) of a cartridge case (30) parallel to the axis (46A, 48A) of rollers (46, 48) so that the rollers can rotate the cartridge case (30) about its longitudinal axis (75).

24. The apparatus as claimed in claim 23, wherein the at least one roller (46) on the face of the first plate (42) comprises a thumb wheel accessible to and manipulatable by a human hand so that the cartridge case (30) can be rotated about its longitudinal axis (75).

25. The apparatus as claimed in claim 24, wherein the cartridge case (30) can be rotated about its longitudinal axis (75) to any desired position.

26. The apparatus as claimed in claim 24, wherein the rollers (46, 48) have a drive and control mechanism for rotation of the cartridge case (30) about its longitudinal axis (75).

27. The apparatus as claimed in one of claims 23 to 26, wherein the axis of rotation (46A) of at least one of the rollers (46) is set at an acute angle to the others to allow for movement of the cartridge case (30) along its longitudinal axis (75).

28. The apparatus as claimed in one of claims 22 to 27, wherein rotation of said cartridge provides a coarse focus adjustment during imaging.

29. The apparatus as claimed in claim 27, wherein when the axis of rotation (46A) of the at least one rollers (46) set at an acute angle is extended in a direction opposite and away from an imaging side of the holding device (40) intersects a plane formed by the axis of rotation (48A) of the two other rollers (48), the cartridge case (30) held in the holding device (40) moves along its longitudinal axis (75) towards the imaging side of the holding device (40) on rotation of the rollers (46, 48).

30. The apparatus as claimed in one of claims 22 to 27, wherein the holding device (40) further comprises a plate (54) slidably attached to its imaging side with the plane of the plate perpendicular to the longitudinal axis (75) of the cartridge case (30) held by the holding device, the plate (54) being attached for movement between a blocking position where it stops the longitudinal movement of the cartridge case (30) to a retracted non-blocking position.

31. A method for imaging an ejector mark (59) on a cartridge case (30) comprising: placing a cartridge case (30) at an imaging position (27);
orientating the cartridge case (30) into a predetermined orientation for imaging; projecting light for illumination at first predefined angle towards the cartridge case (30); taking a first image of the cartridge case (30);
projecting light for illumination at a second predefined angle towards the cartridge case (30); and
taking a second image of the cartridge case; using the images obtained for comparative analysis;
**characterized in that**
the steps of projecting light for illumination at a first predefined angle and then projecting light at the second predefined angle are steps selected from the group comprising:
a.) positioning a first light source (28) at a first predetermined position to project light at the first predefined angle and positioning a second light source (29) at a second predetermined position to project light at the second predefined angle;
b.) positioning a light source (28, 29) for movement between a first predetermined position for projecting light at the first predefined angle and then moving the light source to a second predetermined position for projecting light at the second predefined angle; or
c.) mounting a light for illumination and then positioning the cartridge case (30) at a first predetermined position so that illumination from the light projects towards the cartridge case at the first predefined angle and then positioning the cartridge case at a second predetermined position so that the illumination from the light projects towards the cartridge case at the second predefined angle.

32. The method of claim 31 comprising:
placing at an imaging position (27) a cartridge case holding device (40) for holding a cartridge case (30) in said predetermined orientation for imaging;
positioning an imaging device (22, 24) so that its optical axis (72) is positioned to image a top of a head of a cartridge case (30) being held by the holding device (40);
positioning a light source (28) at a first predetermined position for illuminating at a first predefined angle the cartridge case (30) held by the holding device (40);
illuminating the cartridge case (30) with the light source at the first predetermined position of illumination;
obtaining a first image with the imaging device (22, 24);
removing the illumination by the light source (28);
positioning a light source (29) at a second predetermined position for illuminating at a second predefined angle the cartridge case (30) held by the holding device (40);
illuminating the cartridge case (30) with the light source (29) at the second predefined angle of illumination;
obtaining a second image with the imaging device;
and wherein the steps of positioning the light source (28, 29) at the first predetermined position of illumination and of positioning the light source at the second predetermined position of illumination is selected from the group consisting of
a.) rotating the holding device (40), which holds the cartridge case (30) at the imaging position (27), to position the cartridge case at the first predetermined position of illumination and rotating the holding device (40), which holds the cartridge case at the imaging position, to position the cartridge case at the second predetermined position of illumination;
b.) placing a first light source (28) at the first predetermined position of illumination and placing a second light source (29) at the second predetermined position of illumination;
c.) rotating the cartridge case (30), held by the holding device (40) at the imaging position, so that the cartridge case is positioned at the first predetermined position of illumination and rotating the cartridge case (30), held by the holding device at the imaging position (27), so that the cartridge case is positioned at the second predetermined position of illumination; or
d.) moving the light source (28, 29) to the first predetermined position of illumination and moving the light source to the second predetermined position of illumination.

33. The method of claim 32, wherein the step of positioning the light source (28, 29) at the first predetermined position involves rotating the holding device (40), which holds the cartridge case (30) at the imaging position (27), to position the cartridge case at the first predetermined position of illumination and the step of positioning the light source at the second predetermined position of illumination involves rotating the holding device, which holds the cartridge case at the imaging position, to position the cartridge case at the second predetermined position of illumination.

34. The method of claim 32, wherein the step of positioning the light source (28, 29) at the first predetermined position of illumination involves placing a first light source (28) at the first predetermined position of illumination and the step of positioning the light source at the second predetermined position of illumination involves placing a second light source (29) at the second predetermined position of illumination.

35. The method of claim 32, wherein the step of positioning the light source (28, 29) at the first predetermined position of illumination involves rotating the cartridge case (30), held by the holding device (40) at the imaging position (27), so that the cartridge case is positioned at the first predetermined position of illumination and the step of positioning the light source at the second predetermined position of illumination involves rotating the cartridge case, held by the holding device at the imaging position, so that the cartridge case is positioned at the second predetermined position of illumination.

36. The method of claim 32, wherein the step of positioning the light source (28, 29) at the first predetermined position of illumination involves moving the light source (28) to the first predetermined position of illumination and the step of positioning the light source at the second predetermined position of illumination involves moving the light source to the second predetermined position of illumination.

37. The method of claim 32, wherein the step of positioning the light source (28, 29) at the first predetermined position of illumination comprises placing it so that a directional axis (93) of the light source forms the first predefined angle at any one angle in a range between 1° to 89° with a plane of the top of the head of the cartridge case (30) at the imaging position (27) and the step of positioning the light source at the second predetermined position of illumination involves placing it so that a directional axis (93) of the light source forms the second predefined angle at any one angle in a range between 1° to 89° with a plane of the top of the head of the cartridge case (30) held at the imaging position (27) by the holding device (40).

38. The method of claim 37, wherein the step of positioning the light source (28, 29) at the first and then the second predetermined position of illumination comprises: positioning them such that an angle between the directional axis (93) of the light source at the first predetermined position of illumination and the directional axis of the light source at the second predetermined position of illumination can be at any angle in a range of from 1° to 179°.

39. The method of claim 32, wherein the step of positioning the imaging device (22, 24) comprises positioning the optical axis (72) of the imaging device so that it is perpendicular to the plane of the top of the head of the cartridge case (30) held by the holding device (40).

40. The method of claim 32, wherein the step of positioning the imaging device (22, 24) includes centering the optical axis (22) on an ejector mark (59) on the top of the head of the cartridge case (30).

41. The method of claim 32, wherein the step of positioning the light source (28, 29) at the first predetermined position comprises positioning it in a tangential orientation to the ejector mark (59) on the cartridge case (30) and the step of positioning the light source at the second predetermined position comprises positioning it in a radial position to the ejector mark on the cartridge case.

42. The method of claim 41, wherein the step of positioning the light source (28, 29) at the second predetermined position of illumination further comprises positioning it so that a directional axis (93) of the light source at the second predetermined position of illumination forms a perpendicular angle to a directional axis of the light source at the first predetermined position of illumination.

43. The method of claim 42, wherein the step of positioning the light source (28, 29) comprises positioning it so that the directional axis (93) of the light source, when positioned at the first predetermined position of illumination forms the first predefined angle of 45° to a plane of the top of the head of the cartridge case (30) and when positioned at the second predetermined position of illumination forms the second predefined angle of 45° to a plane of the top of the head of the cartridge case.

44. The method of claim 31 or claim 32 further comprising the further step of projecting diffuse light onto the cartridge case (30) when obtaining the 1st and 2nd image.

45. The method of claim 44 wherein the step of projecting diffuse light comprises projecting axial symmetric light from a ring light.

46. The method of claim 31 or claim 32 comprising the further step of partially diffusing the light which illuminates the cartridge case (30) at the first and second angles of illumination.

47. The method of claim 46 wherein the step of partially diffusing the light comprises placing a light diffuser around the cartridge case (30).

48. The method of claim 31 wherein the step of projecting light for illumination at a first predefined angle includes positioning a first light source (28) at a first predetermined position to project light at the first predefined angle and the step of projecting light: at the second predefined angle includes positioning a second light source (29) at a second predetermined position to project light at the second predefined angle.

49. The method of claim 31 wherein the step of projecting light for illumination at the first and then second predefined angles includes positioning a light source (28, 29) for movement between a first predetermined position for projecting light at the first predefined angle and then moving the light source to a second predetermined position for projecting light at the second predefined angle.

50. The method of claim 31 wherein the step of projecting light for illumination at a first and then a second predefined angle comprises mounting a light for illumination and then positioning the cartridge case (30) at a first predetermined position so that illumination from the light projects towards the cartridge case at the first predefined angle and then positioning the cartridge case at a second predetermined position so that the illumination from the light projects towards the cartridge case at the second predefined angle.

## Revendications

1. Appareil pour visualiser une trace d'éjecteur (59) sur un étui (30) comprenant :
un dispositif de maintien d'un étui (40) monté pour maintenir, selon une orientation prédéterminée pour visualiser, un étui (30) dans une position de visualisation (27) ;
un dispositif de visualisation (22, 24) monté avec un axe optique (72) dudit dispositif de visualisation positionné pour visualiser le dessus d'une tête de l'étui (30) dans la position de visualisation (27) ;
une première source lumineuse (28) montée dans une première position prédéterminée pour éclairer l'étui (30) maintenu par le dispositif de maintien (40) à un premier angle prédéfini pour obtenir une première image à l'aide du dispositif de visualisation (22, 24).
une deuxième source lumineuse (29) montée dans une deuxième position prédéterminée pour éclairer l'étui (30) maintenu par le dispositif de maintien (40) à un deuxième angle prédéfini pour obtenir une deuxième image à l'aide du dispositif de visualisation (22, 24) ; et
le dispositif de maintien (40), la première et deuxième sources de lumière (28 ;29) et le dispositif de visualisation (22, 24) coopérant de telle façon que le dispositif de visualisation puisse prendre une première image de l'objet avec une lumière d'éclairage à partir du premier angle d'éclairage prédéfini et une deuxième image de l'objet avec la lumière depuis le deuxième angle d'éclairage prédéfini ;
grâce auquel on peut utiliser les images obtenues pour une analyse comparative ;
**caractérisé en ce que** le dispositif de maintien (40), la première et la deuxième sources de lumière (28 ;29) et le dispositif de visualisation (22, 24) soient adaptés de telle façon que ladite coopération est choisie parmi le groupe constitué de
(a) faire pivoter le dispositif de maintien (40) pour positionner l'étui (30) dans la première position d'éclairage prédéterminée et faire pivoter le dispositif de maintien pour positionner l'étui dans la deuxième position d'éclairage prédéterminée ;
(b) aire pivoter l'étui (30) pour positionner l'étui dans la première position d'éclairage prédéterminée et faire pivoter l'étui pour positionner l'étui dans la deuxième position d'éclairage prédéterminée ; ou
(c) éplacer ladite première source lumineuse (28) dans ladite deuxième position prédéterminée, dans laquelle ladite première source lumineuse (28) est ladite deuxième source lumineuse (29).

2. Appareil selon la revendication 1, dans lequel l'angle prédéfinit un axe directionnel de la source lumineuse (28, 29) en fonction d'un plan d'un dessus d'une tête de l'étui (30) maintenu par le dispositif de maintien (40) dans la position de visualisation (27) puisse n'importe quel angle dans une gamme de 1° à 90°.

3. Appareil selon la revendication 1 ou la revendication 2, dans lequel l'angle prédéfinit un axe directionnel de la source lumineuse (28, 29) en fonction d'un plan d'un dessus de la tête de l'étui (30) maintenu par le dispositif de maintien (40) dans la position de visualisation (27) dans une orientation prédéterminée soit de 30° approximativement.

4. Appareil selon l'une quelconque des revendications 1 à 3, dans lequel l'axe optique (72) du dispositif de visualisation (22, 24) est perpendiculaire au plan d'un dessus de la tête de l'étui (30) maintenu par le dispositif de maintien (40).

5. Appareil selon l'une quelconque des revendications 1 à 4, dans lequel un axe optique (72) du dispositif de visualisation (22, 24) est centré sur une trace d'éjecteur (59) sur le dessus de la tête de l'étui (30).

6. Appareil selon l'une des revendications 1 à 5, dans lequel un axe directionnel (93) de la source lumineuse (28, 29) dans la première position prédéterminée pour visualiser est dans une orientation tangentielle dans la trace de l'éjecteur (59) sur l'étui (30) et l'axe directionnel de la source lumineuse (28, 29) dans la deuxième position prédéterminée pour visualiser est dans une orientation radiale à la trace de l'éjecteur (59) sur l'étui (30).

7. Appareil selon l'une quelconque des revendications 1 à 6, dans lequel l'angle ente un axe directionnel (93) de la source lumineuse (28, 29) dans la première position prédéterminée et l'axe directionnel (93) de la source lumineuse (28, 29) dans la deuxième position prédéterminée dans le but de la visualisation peut être n'importe quel angle dans une gamme de 1° à 179°.

8. Appareil selon l'une quelconque des revendications 1 à 7, dans lequel l'angle entre un axe directionnel de la source lumineuse (28) dans la première position prédéterminée et l'axe directionnel de la source lumineuse dans la deuxième position prédéterminée (29) est de 90°.

9. Appareil selon l'une quelconque des revendications 1 à 8, dans lequel le dispositif de maintien (40) comprend un premier plateau (42) avec une face de côté (42A) et un deuxième plateau (44) avec une face de côté (44A) et les plateaux étant inclinés l'un vers l'autre de façon démontable sur leurs faces de côtés de telle façon qu'elles maintiennent fixés un étui (30) entre elles avec un axe longitudinal de l'étui approximativement parallèle à la face du premier plateau (42) et la face du deuxième plateau (44) de telle façon qu'un dessus de la tête de l'étui soit dans la position de visualisation (27).

10. Appareil selon la revendication 9, dans lequel le dispositif de maintien (40) comprend de plus un moyen pour faire pivoter l'étui (30) autour de son axe longitudinal (75).

11. Appareil selon la revendication 10, dans lequel le moyen de rotation comprend au moins un rouleau (46) sur la face du premier plateau (42) et deux rouleaux (48) sur la face du deuxième plateau (44), les axes (46A, 48A) de rotation de tous les rouleaux étant sensiblement parallèles les uns par rapport aux autres, et les rouleaux étant placés de telle façon que lorsque les faces des plateaux (42, 44) sont jointes ensembles les rouleaux (46, 48) peuvent maintenir fixés l'étui (30) entre celles-ci, avec l'axe longitudinal (75) d'un étui (30) parallèle à l'axe des rouleaux de telle façon que les rouleaux puissent aussi faire pivoter l'étui (30) autour de son axe longitudinal (75).

12. Appareil selon la revendication 11, dans lequel le rouleau (46) sur la face du premier plateau (42) comprend une molette accessible et pouvant être manipulée par une main humaine de telle façon que l'on puisse manuellement faire pivoter l'étui (30) autour de son axe longitudinal (75).

13. Appareil selon la revendication 11, dans lequel les rouleaux (46, 48) ont un mécanisme d'entraînement et de commande pour faire pivoter l'étui (30) autour de son axe longitudinal (75).

14. Appareil selon l'une quelconque des revendications 11 à 13, dans lequel l'axe de rotation (46A) d'au moins un des rouleaux (46) est positionné selon un angle aigu par rapport aux autres pour permettre un mouvement de l'étui (30) le long de son axe longitudinal (75).

15. Appareil selon la revendication 14, dans lequel lorsque l'axe de rotation (46A) du au moins un rouleau (46) positionné selon un angle aigu s'étend dans une direction opposée et éloignée d'un côté de visualisation du dispositif de maintien (40) croise un plan formé par l'axe (48A) de rotation des deux autres rouleaux(48), l'étui (30) maintenu dans le dispositif de maintien (40) se déplace le long de son axe longitudinal (75) vers le côté de visualisation du dispositif de maintien (40) en rotation avec les rouleaux (46, 48).

16. Appareil selon la revendication 15, dans lequel le dispositif de maintien (40) comprend de plus un plateau (54) attaché de façon coulissante à son côté de visualisation avec le plan du plateau perpendiculaire à l'axe longitudinal (75) de l'étui (30) maintenu par le dispositif de maintien (40), le plateau (54) étant attaché pour se déplacer entre une position de blocage à laquelle il arrête le déplacement longitudinal de l'étui (30) vers une position de retrait non bloquante.

17. Appareil selon l'une quelconque des revendications 1 à 16, comprenant de plus un diffuseur de lumière (81) placé entre la source lumineuse (28, 29) et l'étui (30) de telle façon que lorsque la première et la deuxième image sont prises une partie de la lumière projetée est diffusée autour de l'étui (30).

18. Appareil selon la revendication 17, dans lequel le diffuseur de lumière (81) comprend un couvercle de protection détachable en matériau translucide qui s'adapte sur et au moins couvre partiellement la position de visualisation.

19. Appareil selon l'une quelconque des revendications 1 à 18, comprenant de plus une source lumineuse diffuse disposée pour projeter une lumière diffuse sur l'étui (30).

20. Appareil selon la revendication 19, dans lequel la source lumineuse diffuse comprend un anneau de lumière.

21. Appareil selon l'une quelconque des revendications 1 à 20, comprenant de plus : un objet de dimensions connues préréglées à un point de calibrage pour visualisation et calibrage par le dispositif de visualisation (22, 24).

22. Dispositif (40) pour maintenir et positionner un étui (30) pour visualisation
**caractérisé par**
un premier plateau (42) avec une face de côté (42A) et un deuxième plateau (44) avec une face de côté (44A) les plateaux étant inclinés de façon démontable l'un vers l'autre sur leur face de côtés de telle façon qu'ils maintiennent un étui (30) entre eux avec un axe longitudinal (75) de l'étui (30) approximativement parallèle à la face (42A) du premier plateau (42) et la face (44A) du deuxième plateau (44) de telle façon que le dessus de la tête de l'étui (30) soit dans une position d'observation (27) et permet de faire pivoter l'étui (30) autour de son axe longitudinal (75).

23. Appareil selon la revendication 22, dans lequel le moyen de rotation comprend : au moins un rouleau (46) sur la face du premier plateau (42) et deux rouleaux (48) sur la face du deuxième plateau (44), les axes de rotation (46A, 48A) de tous les rouleaux (46, 48) étant sensiblement parallèles les uns aux autres, et les rouleaux étant placés de telle façon que lorsque les faces (42A, 44A) des plateaux (42, 41) sont joints ensembles les rouleaux peuvent maintenir fixé un étui (30) entre eux, avec l'axe longitudinal (75) d'un étui (30) parallèle à l'axe (46A, 48A) des rouleaux (46, 48) de telle façon que les rouleaux puissent faire pivoter l'étui (30) autour de son axe longitudinal (75).

24. Appareil selon la revendication 23, dans lequel le au moins un rouleau (46) sur la face du premier plateau (42) comprend une molette accessible et pouvant être manipulée par une main humaine de telle façon que l'on puisse faire pivoter l'étui (30) autour de son axe longitudinal (75).

25. Appareil selon la revendication 24, dans lequel on peut faire pivoter l'étui (30) autour de son axe longitudinal (75) dans n'importe quelle position désirée.

26. Appareil selon la revendication 24, dans lequel les rouleaux (46, 48) ont un mécanisme de transmission et de commande pour faire pivoter l'étui (30) autour de son axe longitudinal (75).

27. Appareil selon n'importe laquelle des revendications 23 à 26, dans lequel l'axe de rotation (46A) d'au moins un des rouleaux (46) est positionné selon un angle aigu par rapport aux autres pour permettre le déplacement de l'étui (30) le long de son axe longitudinal (75).

28. Appareil selon l'une quelconque des revendications 22 à 27, dans lequel la rotation dudit étui permet un mise au point grossière pendant la visualisation.

29. Appareil selon la revendication 27, dans lequel lorsque l'axe de rotation (46A) du au moins un rouleau (46) positionné à un angle aigu s'étend dans une direction opposée et éloignée d'un côté de visualisation du dispositif de maintien (40) croise un plan formé par les axes de rotation (48A) des deux autres rouleaux (48), l'étui (30) maintenu dans le dispositif de maintien (40) se déplace le long de son axe longitudinal (75) vers le côté de visualisation du dispositif de maintien (40) en rotation avec les rouleaux (46, 48).

30. Appareil selon l'une quelconque des revendications 22 à 27, dans lequel le dispositif de maintien (40) comprend de plus un plateau (54) attaché de façon coulissante à son côté de visualisation avec le plan du plateau perpendiculaire à l'axe longitudinal (75) de l'étui (30) maintenu par le dispositif de maintien, le plateau (54) étant attaché pour se déplacer entre une position de blocage où il stoppe le déplacement longitudinal de l'étui (30) à une position de retrait non bloquante.

31. Procédé pour visualiser une trace d'éjecteur (59) sur un étui (30) comprenant : le positionnement d'un étui (30) dans une position de visualisation (27) ; l'orientation de l'étui (30) dans une orientation prédéterminée pour la visualisation ; la projection de lumière pour éclairer à un angle prédéfini vers l'étui (30) ; l'obtention d'une première image de l'étui (30) ;
la projection de lumière pour éclairer à un angle prédéfini vers l'étui (30) ; et
l'obtention d'une deuxième image de l'étui ; l'utilisation des images obtenues pour une analyse comparative ;
**caractérisé en ce que**
les étapes de projection de lumière pour éclairer selon un premier angle prédéfini puis la projection de lumière selon un deuxième angle prédéfini sont des étapes choisies parmi le groupe comprenant :
a) le positionnement d'une première source lumineuse (28) à une première position prédéterminée pour projeter la lumière selon le premier angle prédéfini et positionner une deuxième source lumineuse (29) à une deuxième position prédéterminée pour projeter la lumière selon le deuxième angle prédéfini ;
b) le positionnement d'une source lumineuse (28,29) pour un déplacement entre une première position prédéterminée pour projeter la lumière selon le premier angle prédéfini puis déplacer la source lumineuse vers une deuxième position prédéterminée pour projeter la lumière selon un deuxième angle prédéfini ; ou
c) le montage d'une lumière pour éclairer puis positionner l'étui (30) à une première position prédéterminée de telle façon que l'éclairage de la lumière se projette vers l'étui selon le premier angle prédéfini puis positionner l'étui à une deuxième position prédéterminée de telle façon que l'éclairage de la lumière se projette vers l'étui selon un deuxième angle prédéfini.

32. Procédé selon la revendication 31 comprenant :
le placement dans une position de visualisation (27) d'un dispositif de maintien (40) d'un étui pour maintenir un étui (30) dans ladite orientation prédéterminée pour une visualisation ;
le positionnement d'un dispositif de visualisation (22, 24) de telle façon que son axe optique (72) soit positionné pour visualiser un dessus d'une tête d'un étui (30) étant maintenu par le dispositif de maintien (40) ;
le positionnement d'une source lumineuse (28) à une première position prédéterminée pour éclairer selon un premier angle prédéfini l'étui (30) maintenu par le dispositif de maintien (40) ;
l'éclairage de l'étui (30) avec la source lumineuse dans la première position d'éclairage prédéterminée ;
l'obtention d'une première image avec le dispositif de visualisation (22, 24) ;
la suppression de l'éclairage par la source lumineuse (28) ;
le positionnement d'une source lumineuse (29) à une deuxième position prédéterminée pour éclairer selon un deuxième angle prédéfini l'étui (30) maintenu par le dispositif de maintien (40) ;
l'éclairage de l'étui (30) avec la source lumineuse (29) selon le deuxième angle d'éclairage prédéfini ;
l'obtention d'une deuxième image avec le dispositif de visualisation ;
et dans lequel les étapes de positionnement de la source lumineuse (28, 29) dans la première position d'éclairage prédéterminée et de positionnement de la source lumineuse dans la deuxième position d'éclairage prédéterminée est choisie est choisi parmi le groupe consistant en
a) rotation du dispositif de maintien (40), qui maintient l'étui (30) dans la position de visualisation (27), pour positionner l'étui dans la première position prédéterminée de visualisation et rotation du dispositif de maintien (40), qui maintient l'étui dans la position de visualisation, pour positionner l'étui dans la deuxième position d'éclairage prédéterminée ;
b) placement d'une première source lumineuse (28) dans la première position d'éclairage prédéterminée et placement d'une deuxième source lumineuse (29) dans la deuxième position d'éclairage prédéterminée ;
c) rotation de l'étui (30), maintenu par le dispositif de maintien (40) dans la position de visualisation, de telle façon que l'étui soit positionné dans la première position d'éclairage prédéterminée et rotation de l'étui (30), maintenu par le dispositif de maintien dans la position de visualisation (27), de telle façon que l'étui soit positionné dans la deuxième position d'éclairage prédéterminée ; ou
d) déplacement de la source lumineuse (28, 29) vers la première position d'éclairage prédéterminée et déplacement de la source lumineuse vers la deuxième position d'éclairage prédéterminée.

33. Procédé selon la revendication 32, dans lequel l'étape de positionnement de la source lumineuse (28, 29) dans la première position prédéterminée implique la rotation du dispositif de maintien (40), qui maintient l'étui (30) dans la position de visualisation (27), pour positionner l'étui dans la première position d'éclairage prédéterminée et l'étape de positionner la source lumineuse dans la deuxième position d'éclairage prédéterminée implique la rotation du dispositif de maintien, qui maintient l'étui dans la position de visualisation, pour positionner l'étui dans la deuxième position d'éclairage prédéterminée.

34. Procédé selon la revendication 32, dans lequel l'étape de positionnement de la source lumineuse (28, 29) dans la première position d'éclairage prédéterminée implique le placement d'une première source lumineuse (28) dans la première position d'éclairage prédéterminée et l'étape de positionnement de la source lumineuse dans une deuxième position d'éclairage prédéterminée implique de placer une deuxième source lumineuse (29) dans la deuxième position d'éclairage prédéterminée.

35. Procédé selon la revendication 32, dans lequel l'étape de positionnement de la source lumineuse (28, 29) dans la première position d'éclairage prédéterminée implique la rotation de l'étui (30), maintenu par le dispositif de maintien (40) dans la position de visualisation (27), de telle façon que l'étui soit positionné dans la première position d'éclairage prédéterminée et l'étape de positionnement de la source lumineuse dans la deuxième position d'éclairage prédéterminée implique la rotation de l'étui, maintenu par le dispositif de maintien dans la position de visualisation, de telle façon que l'étui soit positionné dans la deuxième position d'éclairage prédéterminée.

36. Procédé selon la revendication 32, dans lequel l'étape de positionnement de la source lumineuse (28, 29) dans la première position d'éclairage prédéterminée implique le déplacement de la source lumineuse (28) vers la première position d'éclairage prédéterminée et l'étape de positionnement de la source lumineuse dans la deuxième position d'éclairage prédéterminée implique le déplacement de la source lumineuse vers la deuxième position d'éclairage prédéterminée.

37. Procédé selon la revendication 32, dans lequel l'étape de positionnement de la source lumineuse (28, 29) dans la première position d'éclairage prédéterminée comprend de la placer de telle façon qu'un axe directionnel (93) de la source lumineuse forme le premier angle prédéfini selon n'importe quel angle dans une gamme de 1° à 89° avec un plan du dessus de la tête de l'étui (30) dans la position de visualisation (27) et l'étape de positionnement de la source de lumière dans la deuxième position d'éclairage prédéterminée implique de la placer de telle façon qu'un axe directionnel (93) de la source lumineuse forme le deuxième angle prédéfini à n'importe quel angle dans une gamme de 1° à 89° avec un plan du dessus de la tête de l'étui (30) maintenu dans la position de visualisation (27) par le dispositif de maintien (40).

38. Procédé selon la revendication 37, dans lequel l'étape de positionnement de la source de lumière (28, 29) dans la première puis dans la deuxième position d'éclairage prédéterminée comprend :leur positionnement de telle façon qu'un angle entre l'axe directionnel (93) de la source lumineuse dans la première position d'éclairage prédéterminée et l'axe directionnel de la source de lumière dans la deuxième position d'éclairage prédéterminée soit à n'importe quel angle dans la gamme de 1° à 179°.

39. Procédé selon la revendication 32, dans lequel l'étape de positionnement du dispositif de visualisation (22, 24) comprend le positionnement de l'axe optique (72) du dispositif de visualisation de telle façon qu'il soit perpendiculaire au plan du dessus de la tête de l'étui (30) maintenu par le dispositif de maintien (40).

40. Procédé selon la revendication 32, dans lequel l'étape de positionnement du dispositif de visualisation (22, 24) comprend le centrage de l'axe optique (22) sur une trace d'éjecteur (59) sur le dessus de la tête de l'étui (30).

41. Procédé selon la revendication 32, dans lequel l'étape de positionnement de la source lumineuse (28, 29) dans la première position prédéterminée comprend son positionnement dans une orientation tangentielle à la trace d'éjecteur (59) sur l'étui (30) et l'étape de positionnement de la source lumineuse dans la deuxième position prédéterminée comprend son positionnement dans une position radiale à la trace d'éjecteur sur l'étui.

42. Procédé selon la revendication 41, dans lequel l'étape de positionnement de la source lumineuse (28, 29) dans la deuxième position d'éclairage prédéterminée comprend de plus son positionnement de telle façon qu'un axe directionnel (93) de la source lumineuse dans la deuxième position d'éclairage prédéterminée forme un angle perpendiculaire à un axe directionnel de la source lumineuse dans la première position d'éclairage prédéterminée.

43. Procédé selon la revendication 42, dans lequel l'étape de positionnement de la source lumineuse (28, 29) comprend son positionnement de telle façon que l'axe directionnel (93) de la source lumineuse, lorsqu'elle est positionnée dans la première position d'éclairage prédéterminée forme le premier angle prédéfini de 45° à un plan du dessus de la tête de l'étui (30) et lorsqu'elle est positionnée dans la deuxième position d'éclairage prédéterminée forme le deuxième angle prédéfini de 45° à un plan du dessus de la tête de l'étui.

44. Procédé selon la revendication 31 ou la revendication 32 comprenant de plus l'étape supplémentaire de projection de lumière diffuse sur l'étui (30) quand on obtient la 1^{ère} et la 2^{ème} image.

45. Procédé selon la revendication 44 dans lequel l'étape de projection de lumière diffuse comprend la projection d'une lumière axiale symétrique à partir d'un anneau de lumière.

46. Procédé selon la revendication 31 ou la revendication 32 comprenant de plus l'étape de diffusion partielle de la lumière qui éclaire l'étui (30) selon le premier et le deuxième angles d'éclairage.

47. Procédé selon la revendication 46 dans lequel l'étape de diffusion partielle de la lumière comprend le placement d'un diffuseur de lumière autour de l'étui (30).

48. Procédé selon la revendication 31 dans lequel l'étape de projection de lumière pour éclairer selon un angle prédéfini comprend le positionnement d'une première source lumineuse (28) dans un première position prédéterminée pour projeter la lumière selon le premier angle prédéfini et l'étape de projection de lumière : selon le deuxième angle prédéfini comprend le positionnement d'une deuxième source lumineuse (29) dans une position prédéterminée pour projeter la lumière selon le deuxième angle prédéfini.

49. Procédé selon la revendication 31 dans lequel l'étape de projection de lumière pour éclairer selon le premier puis le deuxième angles prédéfinis comprend le positionnement d'une source lumineuse (28, 29) pour déplacement entre une première position prédéterminée pour projeter la lumière selon le premier angle prédéfini puis déplacer la source lumineuse selon le deuxième angle prédéfini.

50. Procédé selon la revendication 31 dans lequel l'étape de projection de lumière pour éclairer selon un premier puis un deuxième angle prédéfinis comprend le montage d'une lumière pour éclairer et puis le positionnement de l'étui (30) dans une première position prédéterminée de telle façon que l'éclairage depuis la lumière se projette vers l'étui selon le premier angle prédéterminé et puis le positionnement de l'étui à une deuxième position prédéterminée e telle façon que l'éclairage depuis la lumière se projette vers l'étui selon le deuxième angle prédéfini.

## Patentansprüche

1. Vorrichtung zur Abbildung einer Auswerfermarkierung (59) auf einer Patronenhülse (30), umfassend:
eine Patronenhülsenhaltevorrichtung (40), die zum Halten einer Patronenhülse (30) in einer Abbildungsposition (27) in einer vorbestimmten Ausrichtung für die Abbildung montiert ist;
eine Abbildungsvorrichtung (22, 24), die so montiert ist, dass eine optische Achse (72) der Abbildungsvorrichtung zur Abbildung einer Oberseite eines Kopfes der Patronenhülse (30) an der Abbildungsposition (27) positioniert ist;
eine erste Lichtquelle (28), die in einer ersten vorbestimmten Position zum Beleuchten der Patronenhülse (30) montiert ist, die von der Haltevorrichtung (40) in einem ersten vordefinierten Winkel gehalten wird, um ein erstes Bild durch die Abbildungsvorrichtung (22, 24) zu erhalten;
eine zweite Lichtquelle (29), die in einer zweiten vorbestimmten Position zum Beleuchten der Patronenhülse (30) montiert ist, die von der Haltevorrichtung (40) in einem zweiten vordefinierten Winkel gehalten wird, um ein zweites Bild durch die Abbildungsvorrichtung (22, 24) zu erhalten; und
wobei die Haltevorrichtung (40), die erste und die zweite Lichtquelle (28; 29) und die Abbildungsvorrichtung (22, 24) zusammenwirken, so dass die Abbildungsvorrichtung ein erstes Bild des Objekts mit Licht zur Beleuchtung aus dem ersten vordefinierten Beleuchtungswinkel und ein zweites Bild des Objekts mit dem Licht aus dem zweiten vordefinierten Beleuchtungswinkel aufnehmen kann;
wobei die erhaltenen Bilder zur Vergleichsanalyse verwendet werden können;
**dadurch gekennzeichnet,**
**dass** die Haltevorrichtung (40), die erste und die zweite Lichtquelle (28; 29) und die Abbildungsvorrichtung (22, 24) dazu ausgebildet sind, dass das Zusammenwirken ausgewählt ist aus der Gruppe bestehend aus:
(a) Drehen der Haltevorrichtung (40), um die Patronenhülse (30) an der ersten vorbestimmten Beleuchtungsposition zu positionieren, und Drehen der Haltevorrichtung, um die Patronenhülse an der zweiten vorbestimmten Beleuchtungsposition zu positionieren;
(b) Drehen der Patronenhülse (30), um die Patronenhülse an der ersten vorbestimmten Beleuchtungsposition zu positionieren, und Drehen der Patronenhülse, um die Patronenhülse an der zweiten vorbestimmten Beleuchtungsposition zu positionieren; oder
(c) Bewegen der ersten Lichtquelle (28) in die zweite vorbestimmte Position, wobei die erste Lichtquelle (28) die zweite Lichtquelle (29) ist.

2. Vorrichtung gemäß Anspruch 1, wobei der vordefinierte Winkel, den eine Richtungsachse der Lichtquelle (28, 29) in Bezug auf eine Ebene einer Oberseite eines Kopfes der Patronenhülse (30) bildet, die von der Haltevorrichtung (40) in der Abbildungsposition (27) gehalten wird, jeder beliebige Winkel in einem Bereich von 1° bis 90° sein kann.

3. Vorrichtung gemäß Anspruch 1 oder 2, wobei der vordefinierte Winkel, den eine Richtungsachse der Lichtquelle (28, 29) in Bezug auf eine Ebene einer Oberseite des Kopfes der Patronenhülse (30) bildet, die von der Haltevorrichtung (40) in der Abbildungsposition (27) in einer vorbestimmten Ausrichtung gehalten wird, etwa 30° beträgt.

4. Vorrichtung gemäß einem der Ansprüche 1 bis 3, wobei die optische Achse (72) der Abbildungsvorrichtung (22, 24) senkrecht zu der Ebene einer Oberseite des Kopfes der Patronenhülse (30) liegt, die von der Haltevorrichtung (40) gehalten wird.

5. Vorrichtung gemäß einem der Ansprüche 1 bis 4, wobei eine optische Achse (72) der Abbildungsvorrichtung (22, 24) auf einer Auswerfermarkierung (59) auf einer Oberseite des Kopfes der Patronenhülse (30) zentriert ist.

6. Vorrichtung gemäß einem der Ansprüche 1 bis 5, wobei eine Richtungsachse (93) der Lichtquelle (28, 29) in der ersten vorbestimmten Position zur Abbildung sich in einer tangentialen Ausrichtung zu der Auswerfermarkierung (59) auf der Patronenhülse (30) befindet und die Richtungsachse der Lichtquelle (28, 29) in der zweiten vorbestimmten Position zur Abbildung sich in einer radialen Ausrichtung zu der Auswerfermarkierung (59) auf der Patronenhülse (30) befindet.

7. Vorrichtung gemäß einem der Ansprüche 1 bis 6, wobei der Winkel zwischen einer Richtungsachse (93) der Lichtquelle (28, 29) in der ersten vorbestimmten Position und der Richtungsachse (93) der Lichtquelle (28, 29) in der zweiten vorbestimmten Position zu Abbildungszwecken jeder beliebige Winkel in einem Bereich von 1° bis 179° sein kann.

8. Vorrichtung gemäß einem der Ansprüche 1 bis 7, wobei der Winkel zwischen einer Richtungsachse der Lichtquelle (28) in der ersten vorbestimmten Position und der Richtungsachse der Lichtquelle (29) in der zweiten vorbestimmten Position 90° ist.

9. Vorrichtung gemäß einem der Ansprüche 1 bis 8, wobei die Haltevorrichtung (40) eine erste Platte (42) mit einer Stirnseite (42A) und eine zweite Platte (44) mit einer Stirnseite (44A) umfasst und die Platten an ihren Stirnseiten lösbar zueinander gespannt sind, so dass sie dazwischen eine Patronenhülse (30) sicher halten, wobei eine Längsachse der Patronenhülse annähernd parallel zu der Stirnseite der ersten Platte (42) und zu der Stirnseite der zweiten Platte (44) liegt, so dass eine Oberseite des Kopfes der Patronenhülse sich in der Abbildungsposition (27) befindet.

10. Vorrichtung gemäß Anspruch 9, wobei die Haltevorrichtung (40) ferner Mittel zum Drehen der Patronenhülse (30) um ihre Längsachse (75) umfasst.

11. Vorrichtung gemäß Anspruch 10, wobei das Drehmittel wenigstens eine Rolle (46) an der Stirnseite der ersten Platte (42) und zwei Rollen (48) an der Stirnseite der zweiten Platte (44) umfasst, wobei die Drehachsen (46A, 48A) aller Rollen im Wesentlichen parallel zueinander sind, und die Rollen so angeordnet sind, dass, wenn die Stirnseiten der Platten (42, 44) miteinander verbunden sind, die Rollen (46, 48) die Patronenhülse (30) sicher dazwischen halten können, wobei die Längsachse (75) einer Patronenhülse (30) parallel zu den Achsen der Rollen liegt, so dass die Rollen auch die Patronenhülse (30) um ihre Längsachse (75) drehen können.

12. Vorrichtung gemäß Anspruch 11, wobei die Rolle (46) an der Stirnseite der ersten Platte (42) ein Zackenrad umfasst, das von einer Hand eines Menschen erfasst und betätigt werden kann, so dass die Patronenhülse (30) manuell um ihre Längsachse (75) gedreht werden kann.

13. Vorrichtung gemäß Anspruch 11, wobei die Rollen (46, 48) einen Antriebs- und Steuermechanismus zur Drehung der Patronenhülse (30) um ihre Längsachse (75) haben.

14. Vorrichtung gemäß einem der Ansprüche 11 bis 13, wobei die Drehachse (46A) von wenigstens einer der Rollen (46) in einem spitzen Winkel zu den anderen eingestellt ist, so dass eine Bewegung der Patronenhülse (30) entlang ihrer Längsachse (75) möglich ist.

15. Vorrichtung gemäß Anspruch 14, wobei, wenn die Drehachse (46A) der wenigstens einen Rolle (46), die in einem spitzen Winkel eingestellt ist, in eine Richtung verlängert wird, die einer Abbildungsseite der Haltevorrichtung (40) entgegengesetzt und von dieser entfernt ist, eine Ebene schneidet, die durch die Drehachse (48A) der beiden anderen Rollen (48) gebildet wird, die Patronenhülse (30), die in der Haltevorrichtung (40) gehalten wird, sich entlang ihrer Längsachse (75) zu der Abbildungsseite der Haltevorrichtung (40) bei Drehung der Rollen (46, 48) bewegt.

16. Vorrichtung gemäß Anspruch 15, wobei die Haltevorrichtung (40) des Weiteren eine Platte (54) umfasst, die gleitfähig an ihrer Abbildungsseite befestigt ist, wobei die Ebene der Platte senkrecht zu der Längsachse (75) der Patronenhülse (30) liegt, die von der Haltevorrichtung (40) gehalten wird, wobei die Platte (54) zur Bewegung zwischen einer Blockierungsposition, in welcher sie die Längsbewegung der Patronenhülse (30) stoppt, und einer zurückgezogenen, nicht blockierenden Position befestigt ist.

17. Vorrichtung gemäß einem der Ansprüche 1 bis 16, des Weiteren umfassend einen Lichtdiffusor (81), der zwischen der Lichtquelle (28, 29) und der Patronenhülse (30) angeordnet ist, so dass, wenn das erste und zweite Bild aufgenommen werden, etwas projiziertes Licht um die Patronenhülse (30) diffundiert wird.

18. Vorrichtung gemäß Anspruch 17, wobei der Lichtdiffusor (81) eine abnehmbare Schutzabdeckung aus lichtdurchlässigem Material umfasst, die über der Abbildungsposition sitzt und diese zum Teil bedeckt.

19. Vorrichtung gemäß einem der Ansprüche 1 bis 18, des Weiteren umfassend eine diffuse Lichtquelle, die zum Projizieren von diffusem Licht auf die Patronenhülse (30) angeordnet ist.

20. Vorrichtung gemäß Anspruch 19, wobei die diffuse Lichtquelle einen Ringlicht umfasst.

21. Vorrichtung gemäß einem der Ansprüche 1 bis 20, des Weiteren umfassend: ein Objekt bekannter Dimensionen, das an einem Kalibrierungspunkt zur Abbildung und Kalibrierung durch die Abbildungsvorrichtung (22, 24) voreingestellt ist.

22. Gerät (40) zum Halten und Positionieren einer Patronenhülse (30) für die Abbildung,
**gekennzeichnet durch**
eine erste Platte (42) mit einer Stirnseite (42A) und eine zweite Platte (44) mit einer Stirnseite (44A),
wobei die Platten an ihren Stirnseiten lösbar zueinander gespannt sind, so dass sie dazwischen eine Patronenhülse (30) sicher halten, wobei eine Längsachse (75) der Patronenhülse (30) annähernd parallel zu der Stirnseite (42A) der ersten Platte (42) und zu der Stirnseite (44A) der zweiten Platte (44) liegt, so dass die Oberseite des Kopfes der Patronenhülse (30) sich in einer beobachtbaren Position (27) befindet, und Mittel zum Drehen der Patronenhülse (30) um ihre Längsachse (75).

23. Vorrichtung gemäß Anspruch 22, wobei das Drehmittel umfasst: wenigstens eine Rolle (46) an der Stirnseite der ersten Platte (42) und zwei Rollen (48) an der Stirnseite der zweiten Platte (44), wobei die Drehachsen (46A, 48A) aller Rollen im Wesentlichen parallel zueinander sind, und die Rollen so angeordnet sind, dass, wenn die Stirnseiten (42A, 44A) der Platten (42, 44) miteinander verbunden sind, die Rollen (46, 48) eine Patronenhülse (30) sicher dazwischen halten können, wobei die Längsachse (75) einer Patronenhülse (30) parallel zu den Achsen (46A, 48A) der Rollen (46, 48) liegt, so dass die Rollen die Patronenhülse (30) um ihre Längsachse (75) drehen können.

24. Vorrichtung gemäß Anspruch 23, wobei die wenigstens eine Rolle (46) an der Stirnseite der ersten Platte (42) ein Zackenrad umfasst, das von einer Hand eines Menschen erfasst und betätigt werden kann, so dass die Patronenhülse (30) um ihre Längsachse (75) gedreht werden kann.

25. Vorrichtung gemäß Anspruch 24, wobei die Patronenhülse (30) um ihre Längsachse (75) in jede gewünschte Position gedreht werden kann.

26. Vorrichtung gemäß Anspruch 24, wobei die Rollen (46, 48) einen Antriebs- und Steuermechanismus zur Drehung der Patronenhülse (30) um ihre Längsachse (75) haben.

27. Vorrichtung gemäß einem der Ansprüche 23 bis 26, wobei die Drehachse (46A) von wenigstens einer der Rollen (46) in einem spitzen Winkel zu den anderen eingestellt ist, so dass eine Bewegung der Patronenhülse (30) entlang ihrer Längsachse (75) möglich ist.

28. Vorrichtung gemäß einem der Ansprüche 22 bis 27, wobei die Drehung der Patrone eine grobe Brennpunkteinstellung während der Abbildung bereitstellt.

29. Vorrichtung gemäß Anspruch 27, wobei, wenn die Drehachse (46A) der wenigstens einen Rolle (46), die in einem spitzen Winkel eingestellt ist, in eine Richtung verlängert wird, die einer Abbildungsseite der Haltevorrichtung (40) entgegengesetzt und entfernt ist, eine Ebene schneidet, die durch die Drehachse (48A) der beiden anderen Rollen (48) gebildet wird, die Patronenhülse (30), die in der Haltevorrichtung (40) gehalten wird, sich entlang ihrer Längsachse (75) zu der Abbildungsseite der Haltevorrichtung (40) bei Drehung der Rollen (46, 48) bewegt.

30. Vorrichtung gemäß einem der Ansprüche 22 bis 27, wobei die Haltevorrichtung (40) des Weiteren eine Platte (54) umfasst, die gleitfähig an ihrer Abbildungsseite befestigt ist, wobei die Ebene der Platte senkrecht zu der Längsachse (75) der Patronenhülse (30) liegt, die von der Haltevorrichtung (40) gehalten wird, wobei die Platte (54) zur Bewegung zwischen einer Blockierungsposition, in welcher sie die Längsbewegung der Patronenhülse (30) stoppt, und einer zurückgezogenen, nicht blockierenden Position befestigt ist.

31. Verfahren zur Abbildung einer Auswerfermarkierung (59) auf einer Patronenhülse (30), umfassend: Anordnen einer Patronenhülse (30) an einer Abbildungsposition (27);
Ausrichten der Patronenhülse (30) in einer vorbestimmten Ausrichtung für die Abbildung; Projizieren von Licht zur Beleuchtung in einem ersten vordefinierten Winkel auf die Patronenhülse (30), Aufnehmen eines ersten Bildes der Patronenhülse (30);
Projizieren von Licht zur Beleuchtung in einem zweiten vordefinierten Winkel auf die Patronenhülse (30); und
Aufnehmen eines zweiten Bildes der Patronenhülse; Verwenden der erhaltenen Bilder zur vergleichenden Analyse;
**dadurch gekennzeichnet,**
**dass** die Schritte zum Projizieren von Licht zur Beleuchtung in einem ersten vordefinierten Winkel und dann Projizieren von Licht in dem zweiten vordefinierten Winkel Schritte sind, die ausgewählt sind aus der Gruppe bestehend aus:
(a) Positionieren einer ersten Lichtquelle (28) in einer ersten vorbestimmten Position, um Licht in dem ersten vordefinierten Winkel zu projizieren, und Positionieren einer zweiten Lichtquelle (29) an einer zweiten vorbestimmten Position, um Licht in dem zweiten vordefinierten Winkel zu projizieren;
(b) Positionieren einer Lichtquelle (28, 29) zur Bewegung zwischen einer ersten vorbestimmten Position zum Projizieren von Licht in dem ersten vordefinierten Winkel und dann Bewegen der Lichtquelle in eine zweite vorbestimmte Position zum Projizieren von Licht in dem zweiten vordefinierten Winkel; oder
(c) Befestigen eines Lichts zur Beleuchtung und dann Positionieren der Patronenhülse (30) in einer ersten vorbestimmten Position, so dass die Beleuchtung von dem Licht zu der Patronenhülse in dem ersten vordefinierten Winkel projiziert wird, und dann Positionieren der Patronenhülse in einer zweiten vorbestimmten Position, so dass die Beleuchtung von dem Licht zu der Patronenhülse in dem zweiten vordefinierten Winkel projiziert wird.

32. Verfahren gemäß Anspruch 31, umfassend:
Anordnen einer Abbildungsposition (27), einer Patronenhülsenhaltevorrichtung (40) zum Halten einer Patronenhülse (30) in der vorbestimmten Ausrichtung für die Abbildung;
Positionieren einer Abbildungsvorrichtung (22, 24), so dass ihre optische Achse (72) zur Abbildung einer Oberseite eines Kopfes einer Patronenhülse (30), die von der Haltevorrichtung (40) gehalten wird, positioniert ist;
Positionieren einer Lichtquelle (28) in einer ersten vorbestimmten Position zum Beleuchten der Patronenhülse (30), die von der Haltevorrichtung (40) gehalten wird, in einem ersten vordefinierten Winkel;
Beleuchten der Patronenhülse (30) mit der Lichtquelle in der ersten vorbestimmten Beleuchtungsposition;
Erhalten eines ersten Bildes mit der Abbildungsvorrichtung (22, 24);
Entfernen der Beleuchtung durch die Lichtquelle (28);
Positionieren einer Lichtquelle (29) in einer zweiten vorbestimmten Position zum Beleuchten der Patronenhülse (30), die von der Haltevorrichtung (40) gehalten wird, in einem zweiten vordefinierten Winkel;
Beleuchten der Patronenhülse (30) mit der Lichtquelle (29) in dem zweiten vordefinierten Beleuchtungswinkel;
Erhalten eines zweiten Bildes mit der Abbildungsvorrichtung;
und wobei die Schritte zum Positionieren der Lichtquelle (28, 29) in der ersten vorbestimmten Beleuchtungsposition und zum Positionieren der Lichtquelle in der zweiten vorbestimmten Beleuchtungsposition ausgewählt sind aus der Gruppe bestehend aus:
(a) Drehen der Haltevorrichtung (40), welche die Patronenhülse (30) an der Abbildungsposition (27) hält, um die Patronenhülse in der ersten vorbestimmten Beleuchtungsposition zu positionieren, und Drehen der Haltevorrichtung (40), welche die Patronenhülse in der Abbildungsposition hält, um die Patronenhülse in der zweiten vorbestimmten Beleuchtungsposition zu positionieren;
(b) Anordnen einer ersten Lichtquelle (28) in der ersten vorbestimmten Beleuchtungsposition und Anordnen einer zweiten Lichtquelle (29) in der zweiten vorbestimmten Beleuchtungsposition;
(c) Drehen der Patronenhülse (30), die von der Haltevorrichtung (40) in der Abbildungsposition gehalten wird, so dass die Patronenhülse in der ersten vorbestimmten Beleuchtungsposition positioniert ist, und Drehen der Patronenhülse (30), die von der Haltevorrichtung in der Abbildungsposition (27) gehalten wird, so dass die Patronenhülse in der zweiten vorbestimmten Beleuchtungsposition positioniert ist; oder
(d) Bewegen der Lichtquelle (28, 29) zu der ersten vorbestimmten Beleuchtungsposition und Bewegen der Lichtquelle zu der zweiten vorbestimmten Beleuchtungsposition.

33. Verfahren gemäß Anspruch 32, wobei der Schritt des Positionierens der Lichtquelle (28, 29) in der ersten vorbestimmten Position das Drehen der Haltevorrichtung (40) beinhaltet, welche die Patronenhülse (30) in der Abbildungsposition (27) hält, um die Patronenhülse in der ersten vorbestimmten Beleuchtungsposition zu positionieren, und der Schritt des Positionierens der Lichtquelle in der zweiten vorbestimmten Beleuchtungsposition das Drehen der Haltevorrichtung beinhaltet, welche die Patronenhülse in der Abbildungsposition hält, um die Patronenhülse in der zweiten vorbestimmten Beleuchtungsposition zu positionieren.

34. Verfahren gemäß Anspruch 32, wobei der Schritt des Positionierens der Lichtquelle (28, 29) in der ersten vorbestimmten Beleuchtungsposition das Anordnen einer ersten Lichtquelle (28) in der ersten vorbestimmten Beleuchtungsposition beinhaltet, und der Schritt des Positionierens der Lichtquelle in der zweiten vorbestimmten Beleuchtungsposition das Anordnen einer zweiten Lichtquelle (29) in der zweiten vorbestimmten Beleuchtungsposition beinhaltet.

35. Verfahren gemäß Anspruch 32, wobei der Schritt des Positionierens der Lichtquelle (28, 29) in der ersten vorbestimmten Beleuchtungsposition das Drehen der Patronenhülse (30), die von der Haltevorrichtung (40) in der Abbildungsposition (27) gehalten wird, beinhaltet, so dass die Patronenhülse in der ersten vorbestimmten Beleuchtungsposition positioniert ist, und der Schritt des Positionierens der Lichtquelle in der zweiten vorbestimmten Beleuchtungsposition das Drehen der Patronenhülse, die von der Haltevorrichtung in der Abbildungsposition gehalten wird, beinhaltet, so dass die Patronenhülse in der zweiten vorbestimmten Beleuchtungsposition positioniert ist.

36. Verfahren gemäß Anspruch 32, wobei der Schritt des Positionierens der Lichtquelle (28, 29) in der ersten vorbestimmten Beleuchtungsposition das Bewegen der Lichtquelle (28) zu der ersten vorbestimmten Beleuchtungsposition beinhaltet und der Schritt des Positionierens der Lichtquelle in der zweiten vorbestimmten Beleuchtungsposition das Bewegen der Lichtquelle zu der zweiten vorbestimmten Beleuchtungsposition beinhaltet.

37. Verfahren gemäß Anspruch 32, wobei der Schritt des Positionierens der Lichtquelle (28, 29) in der ersten vorbestimmten Beleuchtungsposition das Anordnen derselben in derartiger Weise beinhaltet, dass eine Richtungsachse (93) der Lichtquelle den ersten vordefinierten Winkel bei einem beliebigen Winkel in einem Bereich zwischen 1° bis 89° mit einer Ebene der Oberseite des Kopfes der Patronenhülse (30) in der Abbildungsposition (27) bildet, und der Schritt des Positionierens der Lichtquelle in der zweiten vorbestimmten Beleuchtungsposition das Anordnen derselben in derartiger Weise beinhaltet, dass eine Richtungsachse (93) der Lichtquelle den zweiten vordefinierten Winkel bei einem beliebigen Winkel in einem Bereich zwischen 1° bis 89° mit einer Ebene der Oberseite des Kopfes der Patronenhülse (30), die von der Haltevorrichtung (40) in der Abbildungsposition (27) gehalten wird, bildet.

38. Verfahren gemäß Anspruch 37, wobei der Schritt des Positionierens der Lichtquelle (28, 29) in der ersten und dann in der zweiten vorbestimmten Beleuchtungsposition umfasst:
Positionieren derselben derart, dass ein Winkel zwischen der Richtungsachse (93) der Lichtquelle in der ersten vorbestimmten Beleuchtungsposition und der Richtungsachse der Lichtquelle in der zweiten vorbestimmten Beleuchtungsposition jeder beliebige Winkel in einem Bereich von 1° bis 179° sein kann.

39. Verfahren gemäß Anspruch 32, wobei der Schritt des Positionierens der Abbildungsvorrichtung (22, 24) das Positionieren der optischen Achse (72) der Abbildungsvorrichtung in derartiger Weise umfasst, dass sie senkrecht zu der Ebene der Oberseite des Kopfes der Patronenhülse (30) liegt, die von der Haltevorrichtung (40) gehalten wird.

40. Verfahren gemäß Anspruch 32, wobei der Schritt des Positionierens der Abbildungsvorrichtung (22, 24) das Zentrieren der optischen Achse (22) auf einer Auswerfermarkierung (59) auf der Oberseite des Kopfes der Patronenhülse (30) umfasst.

41. Verfahren gemäß Anspruch 32, wobei der Schritt des Positionierens der Lichtquelle (28, 29) in der ersten vorbestimmten Position deren Positionieren in einer tangentialen Ausrichtung zu der Auswerfermarkierung (59) auf der Patronenhülse (30) umfasst, und der Schritt des Positionierens der Lichtquelle in der zweiten vorbestimmten Position deren Positionieren in einer radialen Position zu der Auswerfermarkierung auf der Patronenhülse umfasst.

42. Verfahren gemäß Anspruch 41, wobei der Schritt des Positionierens der Lichtquelle (28, 29) in der zweiten vorbestimmten Beleuchtungsposition ferner deren Positionieren in derartiger Weise umfasst, dass eine Richtungsachse (93) der Lichtquelle in der zweiten vorbestimmten Beleuchtungsposition einen senkrechten Winkel mit einer Richtungsachse der Lichtquelle in der ersten vorbestimmten Beleuchtungsposition bildet.

43. Verfahren gemäß Anspruch 42, wobei der Schritt des Positionierens der Lichtquelle (28, 29) deren Positionieren in derartiger Weise umfasst, dass die Richtungsachse (93) der Lichtquelle, wenn diese in der ersten vorbestimmten Beleuchtungsposition positioniert ist, den ersten vordefinierten Winkel von 45° zu einer Ebene einer Oberseite des Kopfes der Patronenhülse (30) bildet, und wenn diese in der zweiten vorbestimmten Beleuchtungsposition positioniert ist, den zweiten vordefinierten Winkel von 45° zu einer Ebene einer Oberseite des Kopfes der Patronenhülse bildet.

44. Verfahren gemäß Anspruch 31 oder Anspruch 32, des Weiteren umfassend den weiteren Schritt des Projizierens von diffusem Licht auf die Patronenhülse (30), wenn das erste und zweite Bild erhalten werden.

45. Verfahren gemäß Anspruch 44, wobei der Schritt des Projizierens von diffusem Licht das Projizieren von axialsymmetrischem Licht von einem Ringlicht umfasst.

46. Verfahren gemäß Anspruch 31 oder Anspruch 32, umfassend den weiteren Schritt des teilweisen Diffundierens des Lichts, das die Patronenhülse (30) in dem ersten und zweiten Beleuchtungswinkel beleuchtet.

47. Verfahren gemäß Anspruch 46, wobei der Schritt des teilweisen Diffundierens des Lichts das Anordnen eines Lichtdiffusors um die Patronenhülse (30) umfasst.

48. Verfahren gemäß Anspruch 31, wobei der Schritt des Projizierens von Licht zur Beleuchtung in einem ersten vordefinierten Winkel das Positionieren einer ersten Lichtquelle (28) in einer ersten vorbestimmten Position zum Projizieren von Licht in dem ersten vordefinierten Winkel umfasst und der Schritt des Projizierens von Licht in dem zweiten vordefinierten Winkel das Positionieren einer zweiten Lichtquelle (29) in einer zweiten vorbestimmten Position zum Projizieren von Licht in dem zweiten vordefinierten Winkel umfasst.

49. Verfahren gemäß Anspruch 31, wobei der Schritt des Projizierens von Licht zur Beleuchtung in dem ersten und dann dem zweiten vordefinierten Winkel das Positionieren einer Lichtquelle (28, 29) zur Bewegung zwischen einer ersten vorbestimmten Position zum Projizieren von Licht in dem ersten vordefinierten Winkel, und dann Bewegen der Lichtquelle in eine zweite vorbestimmte Position zum Projizieren von Licht in dem zweiten vordefinierten Winkel umfasst.

50. Verfahren gemäß Anspruch 31, wobei der Schritt des Projizierens von Licht zur Beleuchtung in einem ersten und dann einem zweiten vordefinierten Winkel das Befestigen eines Lichts zur Beleuchtung und dann das Positionieren der Patronenhülse (30) in einer ersten vorbestimmten Position umfasst, so dass die Beleuchtung von dem Licht zu der Patronenhülse in dem ersten vordefinierten Winkel projiziert wird, und dann das Positionieren der Patronenhülse in einer zweiten vorbestimmten Position, so dass die Beleuchtung von dem Licht zu der Patronenhülse in dem zweiten vordefinierten Winkel projiziert wird.
